# EUROPEAN PATENT APPLICATION

(11) **EP 4 746 149 A1**
(43) Date of publication of application: **20.05.2026**
(21) Application number: 25849696.7
(22) Date of filing: 09.05.2025
(51) Int. Cl.: H01M 50/204, H01M 50/244, H01M 50/289

(54) **BATTERY DEVICE AND ELECTRIC DEVICE**

(30) Priority: 13.08.2024 CN 202411108893
(71) Applicant: Contemporary Amperex Technology Co., Limited, Ningde, Fujian 352100 (CN)
(72) Inventor: WU, Weijie, Ningde, Fujian 352100 (CN); LI, Honglei, Ningde, Fujian 352100 (CN); HUANG, Jingfei, Ningde, Fujian 352100 (CN); LIU, Jianhua, Ningde, Fujian 352100 (CN)
(74) Representative: Kraus & Lederer PartGmbB
(86) International application number: PCT/CN2025/094089
(87) International publication number: WO 2026/036806

(57) **Abstract**

The present application is applicable to the technical field of power battery apparatus, and provides a battery apparatus (100) and an electric device (200), where the battery apparatus includes: a box body (10); a plurality of battery cells (20), provided in the box body, where the plurality of battery cells are arranged at least in a first direction; a copying member (30), accommodated in the box body, where the copying member is configured to replace the battery cell, and the copying member is capable of abutting against the adjacent battery cell and/or the copying member; and the copying member is made of at least one of plastic, ceramic, fiber, wood, resin or composite metal material. In the battery apparatus provided in embodiments of the present application, when a capacity of the battery apparatus is reduced, the copying member can occupy a vacant mounting position formed by reducing a quantity of battery cells, and the copying member provides constraints for the adjacent battery cell, thereby improving overall stability of the battery apparatus. The copying member is provided so that the battery apparatus is not designed with different box bodies of the battery apparatus for different requirements.

## Description

The present application claims the priority of Chinese Patent Application No. 202411108893.1, filed with the China National Intellectual Property Administration on August 13, 2024, entitled "BATTERY APPARATUS AND ELECTRIC DEVICE", the entire content of which is incorporated herein by reference.

### TECHNICAL FIELD

The present application relates to the technical field of power battery apparatus, and in particular, to a battery apparatus and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

Different electric vehicles may require different battery capacities, and a quantity of battery cells in the battery may change with the demand of the battery capacity. This leads to a fact that, when a shape of a battery box body is unchanged, vacant mounting positions are formed in the box body with the decreased battery capacity; moreover, battery cells adjacent to the vacant mounting positions are prone to lack of constraints, thereby resulting in the decrease of the overall stability of the battery. However, if the vacant mounting positions are to be reduced or eliminated, the shape of the box body, the arrangement structure of the battery cells, the processing equipment, and the like need to be redesigned, which greatly increases the processing and manufacturing cost.

### SUMMARY

In view of the above problems, the present application provides a battery apparatus and an electric device, which can alleviate negative influence of capacity change of the battery apparatus on the stability of the battery apparatus.

In a first aspect, the present application provides a battery apparatus, and the battery apparatus includes: a box body; a plurality of battery cells, provided in the box body, where the plurality of battery cells are arranged at least in a first direction; a copying member, accommodated in the box body, where the copying member is configured to replace the battery cell, and the copying member is capable of abutting against the adjacent battery cell and/or the copying member; and the copying member is made of at least one of plastic, ceramic, fiber, wood, resin or composite metal material.

In a technical solution of this embodiment, the battery apparatus includes the copying member; when a capacity of the battery apparatus is reduced, the copying member can occupy a vacant mounting position formed by reducing a quantity of battery cells, and the copying member provides constraints for the adjacent battery cell, thereby improving overall stability of the battery apparatus. The technical solution of this embodiment further provides some materials of the copying member, so that the copying member can provide good constraints for the battery cell. Meanwhile, the copying member is provided so that the battery apparatus is not designed with different box bodies of the battery apparatus for different requirements, reducing the processing cost of the battery apparatus.

In some embodiments, the copying member includes a housing, the housing is provided with an accommodating space, and the housing is made of at least one of the plastic, the ceramic, the fiber, the wood, the resin, or the composite metal material.

In the technical solution of this embodiment, the copying member includes the housing, and the accommodating space is provided in the housing, so that the copying member can not only provide good constraints for the battery cell, but also reduce the weight of the copying member, thereby reducing the negative influence of the copying member on the overall weight of the battery apparatus.

In some embodiments, a reinforcing structure connected to the housing is provided in the accommodating space.

In the technical solution of this embodiment, the reinforcing structure is provided in the accommodating space to improve the overall strength of the copying member, thereby improving the support performance of the copying member on the adjacent battery cells. When the battery cell expands, the copying member can better suppress the expansion of the battery cell, thereby reducing the possible damage to the battery cell.

In some embodiments, the battery cell includes a casing body, the casing body includes first walls and second walls that are located on a peripheral side of the battery cell and that are sequentially connected end to end, areas of the first walls are greater than areas of the second walls, the first walls are spaced apart from each other in the first direction, the second walls are spaced apart from each other in a second direction, and the second direction and the first direction are arranged at an included angle; and the housing includes first surfaces spaced apart from each other in the first direction, the reinforcing structure comprises a first reinforcing rib connected to the housing, and the first reinforcing rib and the first surface are arranged at an included angle.

In the technical solution of this embodiment, the reinforcing structure includes the first reinforcing rib, and the first reinforcing rib and the first surface are arranged at an included angle, so that the first reinforcing rib can suppress the expansion deformation of the first wall. Since the first wall with a larger area is more likely to deform and the deformation amount thereof is greater than that of the second wall during the charging and discharging process of the battery cell, the first reinforcing rib is provided to suppress the deformation of the first wall.

In some embodiments, the housing further includes second surfaces spaced apart from each other in the second direction, and the first reinforcing rib and the second surface are arranged at an included angle.

In the technical solution of this embodiment, the first reinforcing rib and the second surface are arranged at the included angle, so that the first reinforcing rib can not only provide support for the adjacent first walls and suppress the deformation of the first wall, but also provide support for the adjacent second walls and suppress the deformation of the second wall.

In some embodiments, the reinforcing structure further includes a second reinforcing rib, the second reinforcing rib intersects with the first reinforcing rib, and the second reinforcing rib and the first surface and/or the second surface are arranged at an included angle.

In the technical solution of this embodiment, the reinforcing structure further includes the second reinforcing rib connected to the housing, to further improve the overall strength of the copying member, so that the copying member can better provide support for the adjacent battery cells.

In some embodiments, the accommodating space is divided into at least two sub-spaces by the reinforcing structure.

In the technical solution of this embodiment, the reinforcing structure can form two or more sub-spaces in the accommodating space, so that each sub-space can be used to absorb part of energy generated by the expansion deformation or displacement of the adjacent battery cells, so that the copying member can better constrain the adjacent battery cells and provide support for the adjacent battery cells.

In some embodiments, the reinforcing structure is made of at least one of metal, the plastic, the ceramic, the fiber, the wood, the resin, or the composite metal material.

The technical solution of this embodiment provides some materials of the reinforcing structure, so that the reinforcing structure has high strength and can provide good constraints for the battery cell.

In some embodiments, an accommodating chamber is filled with a filling material.

In the technical solution of this embodiment, the accommodating chamber is filled with the filling material, so that the support performance of the copying member is improved by the filling material, and the copying member can better provide support for the adjacent battery cells.

In some embodiments, the filling material includes at least one of the metal, the plastic, the ceramic, the fiber, the wood, foam, or the composite metal material.

The technical solution of this embodiment provides some materials of the filling material, so that the filling material can better improve the support performance of the copying member, and the copying member can better provide support for the adjacent battery cells.

In some embodiments, a closed accommodating space is formed in the housing; or the housing is provided with at least one opening to form an open accommodating space.

The technical solution of this embodiment provides some different structures of the accommodating space, so that the copying member can not only provide support for the adjacent battery cells, but also have light weight, and is easy to process.

In some embodiments, the housing includes a side wall, the side wall is located on a side of the housing facing the adjacent battery cell, and the side wall is capable of abutting against the corresponding battery cell.

In the technical solution of this embodiment, the housing includes the side wall, and the side wall abuts against the adjacent battery cells to increase a contact area between the copying member and the adjacent battery cells, thereby reducing stress concentration. This arrangement enables the copying member to not only suppress the deformation of the adjacent battery cells, but also reduce the damage to the adjacent battery cells.

In some embodiments, the copying member is of a solid structure.

This embodiment provides some other structures of the copying member, and the copying member is of the solid structure, so that the copying member can better provide support for the adjacent battery cells to suppress the deformation of the adjacent battery cells.

In some embodiments, a shape of the copying member is the same as a shape of the battery cell.

In the technical solution of this embodiment, the shape of the copying member is the same as the shape of the battery cell, so that the copying member can better occupy a vacant mounting position, and a gap between the copying member and the adjacent battery cells can be reduced. This arrangement enables the copying member to better provide support for the adjacent battery cells, to suppress deformation of the adjacent battery cells.

In some embodiments, a ratio of a volume of the copying member to a volume of the battery cell ranges from 0.9 to 1.1.

The technical solution of this embodiment provides some ranges of the volume ratio between the copying member and the battery cell, so as to reduce the processing difficulty of the copying member, and the copying member can also constrain the adjacent battery cells and suppress the deformation of the adjacent battery cells.

In some embodiments, in the first direction, a ratio of a dimension of the copying member to a dimension of the battery cell ranges from 0.9 to 1.1; and/or in the second direction, a ratio of a dimension of the copying member to a dimension of the battery cell ranges from 0.9 to 1.1, and the second direction and the first direction are arranged at the included angle.

The technical solution of this embodiment provides some ranges of the dimension ratio between the copying member and the battery cell, so as to reduce the processing difficulty of the copying member, and the copying member can also constrain the adjacent battery cells and suppress the deformation of the adjacent battery cells.

In some embodiments, a beam body is provided in the box body, and at least one side of the copying member abuts against the beam body.

In the technical solution of this embodiment, at least one side of the copying member abuts against the beam body to reduce the quantity of battery cells on the peripheral side of the copying member, thereby reducing the mounting difficulty of the copying member. Meanwhile, part of a deformation force of the adjacent battery cells, exerted on the copying member, can also be transmitted to the adjacent beam body; and in other words, the beam body can provide support for the copying member, so that the copying member can better support the adjacent battery cells.

In some embodiments, the beam body includes an expansion beam located between the two adjacent battery cells; and/or the beam body includes a side beam located on a peripheral side of the box body, and the side beam is adjacent to the battery cell and/or the copying member.

The technical solution of this embodiment provides some specific structures of the beam body, so that the beam body may be a side beam, and in this case, the copying member is located at an edge of the battery apparatus. The beam body may also be an expansion beam, and in this case, the copying member is located in the middle of the battery apparatus, so that the copying member can suppress the deformation of the adjacent battery cells at different positions of the battery apparatus.

In some embodiments, in a width direction of the box body, the copying member is located in the middle of the box body; and/or in a length direction of the box body, the copying member is located in the middle of the box body.

The technical solution of this embodiment provides some positions of the copying member, so that the copying member is located in the middle of the box body in the length direction and/or the width direction. Since the plurality of battery cells in the box body have substantially a same expansion cycle during the charging and discharging process of the battery apparatus, the deformation force generated by the expansion of each battery cell is likely to accumulate and increase in the middle region of the box body. Accordingly, the copying member is provided in the middle of the box body, so that the relatively large deformation force can act on the copying member. This enables the copying member to replace the battery cell and therefore protects the battery cell. Meanwhile, the copying member can also provide support for the adjacent battery cells in the middle of the box body to suppress the accumulation and transmission of the deformation force.

In some embodiments, each peripheral side of the copying member abuts against the adjacent battery cells.

The technical solution of this embodiment provides other some positions of the copying member, and the battery cells are provided on each peripheral side of the copying members, so that the copying member can provide support for each adjacent battery cell. Meanwhile, mutual influence between the battery cells can also be reduced.

In some embodiments, the battery apparatus further includes a buffer member; the buffer member is provided between the two adjacent battery cells, and/or the buffer member is provided between the copying member and the adjacent battery cells.

In the technical solution of this embodiment, the buffer member is provided in the box body, and the buffer member is located between the two adjacent battery cells or between the copying member and the adjacent battery cells, and the deformation force generated by the deformation of the battery cell is dispersed by the buffer member, so that the deformation force generated by the deformation of the battery cell can be uniformly exerted onto another adjacent battery cell or the copying member to reduce the stress concentration.

In some embodiments, the copying member is of an integrally molded structure.

In the technical solution of this embodiment, the copying member is of the integrally molded structure to alleviate a problem of poor strength of a structural connection part, thereby improving the overall strength of the copying member. Meanwhile, the structural consistency of the copying member can be improved, and the utilization rate of the material can be improved.

In some embodiments, the copying member is made of at least one of the plastic and the resin; and the copying member is of one of an injection molding structure, a blow molding structure, and an extrusion molding structure.

In the technical solution of this embodiment, the copying member is one of the injection molding structure, the blow molding structure, and the extrusion molding structure, so that the copying member can have better mechanical strength and structural consistency. Meanwhile, the present application can also meet the requirements of the copying member for complex structures, and has the high production efficiency.

In some embodiments, the box body includes a lower box body and a top plate connected to the lower box body, the lower box body is provided with an accommodating chamber having an opening on one side, the accommodating chamber is configured to accommodate the battery cell and the copying member, the top plate covers an opening side of the accommodating chamber, and the lower box body comprises a bottom plate opposite to the top plate; and the copying member is spaced apart from either the top plate or the bottom plate, and a vacant space is formed between the copying member and the corresponding top plate or bottom plate.

In the technical solution of this embodiment, the copying member is spaced apart from either the top plate of the box body or the bottom plate thereof, and is not connected to the top plate or the bottom plate, so that the copying member is mainly used to occupy the vacant mounting position in the battery apparatus, and the mounting difficulty of the copying member can also be reduced.

In some embodiments, the adjacent battery cells are electrically connected by an electric connection structure, and the electric connection structure can cross the adjacent copying member.

In the technical solution of this embodiment, the adjacent battery cells are connected by the electric connection structure, and the electric connection structure can cross the copying member, so as to reduce the mounting difficulty of the copying member. Meanwhile, the interference of the copying member on electric energy transmission between the battery cells can also be reduced.

In some embodiments, the battery apparatus is any one of a prismatic battery apparatus, a blade battery apparatus, a cylindrical battery apparatus, a pouch battery apparatus, and a laminated battery apparatus.

The technical solution of this embodiment provides some specific types of the battery apparatus, so that the copying member can be adapted to multiple different types of battery apparatus.

In a second aspect, some embodiments of the present application further provide an electric device, and the electric device includes the battery apparatus provided in some embodiments of the first aspect.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is a schematic structural diagram of a vehicle provided in some embodiments of the present application;
FIG. 2 is an exploded schematic diagram of a battery apparatus provided according to some embodiments of the present application;
FIG. 3 is an exploded schematic diagram of a battery cell provided according to some embodiments of the present application;
FIG. 4 is a top view of a battery apparatus after an upper box body is removed provided according to some embodiments of the present application;
FIG. 5 is a first schematic perspective view of a copying member provided according to some embodiments of the present application;
FIG. 6 is a second schematic perspective view of a copying member provided according to some embodiments of the present application;
FIG. 7 is a third schematic perspective view of a copying member provided according to some embodiments of the present application;
FIG. 8 is a fourth schematic perspective view of a copying member provided according to some embodiments of the present application;
FIG. 9 is a fifth schematic perspective view of a copying member provided according to some embodiments of the present application;
FIG. 10 is a sixth schematic perspective view of a copying member provided according to some embodiments of the present application;
FIG. 11 is a partial schematic cross-sectional view of a battery apparatus provided according to some embodiments of the present application;
FIG. 12 is an exploded schematic diagram of a battery apparatus provided according to some other embodiments of the present application;
FIG. 13 is an exploded schematic diagram of a battery apparatus provided according to some still other embodiments of the present application.

Symbols in the figures have the following meanings:
1000. vehicle;
100. battery apparatus;
10. box body; 101. accommodating chamber; 11. upper box body; 111. top plate; 12. lower box body; 121. bottom plate; 13. beam body; 131. side beam; 132. expansion beam;
20. battery cell; 21. casing body; 211. first wall; 212. second wall; 22. end cover; 23. electrode assembly; 24. electrode terminal;
30. copying member; 31. housing; 311. accommodating space; 3111. sub-space; 312. side wall; 313. first surface; 314. second surface; 32. reinforcing structure; 321. first reinforcing rib; 322. second reinforcing rib; 331. first position; 332. second position;
40. buffer member;
200. motor;
300. controller.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a nonexclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an internal communication between two elements or interaction between two elements. A person of ordinary skill in the art may understand the specific meanings of the above terms in the embodiments of the present application according to specific situations.

At present, in view of the development of the market, the use of the power battery apparatus is becoming increasingly more widespread. The power battery apparatus is used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of the power battery apparatus continues to expand, a market demand for the power battery apparatus continues to increase.

For different electric devices, especially for different models of the same device, the required capacity of the battery apparatus may be different, and a quantity of battery cells in the battery apparatus may change with the demand of the capacity of the battery apparatus. This results in that in different models of the same device, if a shape of a box body of the battery apparatus is to be unchanged, for a model of the battery apparatus with a smaller capacity, some battery cells in the box body need to be removed and vacant mounting positions are formed. Since the battery cells will expand during the charging and discharging process, and the expansion cycles of the battery cells in the same battery apparatus are substantially the same, when the box body is fully loaded with the battery cells, the expansion deformation of the adjacent battery cells can interact and suppress each other, but if there is a vacant mounting position in the box body, the battery cells on the peripheral side of the vacant mounting position will lack of constraints and cause overexpansion of the battery cells, and cause damage to the battery cells, thereby reducing the overall reliability of the battery apparatus.

If the vacant space is reduced while the capacity requirements of the battery apparatus are met, it is necessary to redesign the shape of the box body, and redesign the battery cell arrangement structure, processing equipment, installation process, and the like, which greatly increases the cost of processing and manufacturing.

Based on the above considerations, in order to reduce the negative influence of the vacant space on the stability of the battery apparatus when the capacity of the battery apparatus changes and the shape of the box body remains unchanged, the present application provides a battery apparatus, and the battery apparatus includes a battery cell and a copying member, where the copying member is configured to replace the battery cell, and the copying member abuts against an adjacent battery cell after being mounted. The copying member is made of at least one of plastic, ceramic, fiber, wood, or composite metal material.

In such a battery apparatus, when a capacity of the battery apparatus is reduced and some battery cells are removed, the copying member can occupy a vacant mounting position formed by reducing a quantity of battery cells, and the copying member provides constraints for the adjacent battery cell, thereby improving overall stability of the battery apparatus. The copying member is provided so that the battery apparatus is not designed with different box bodies of battery apparatus for different requirements, reducing the processing cost of the battery apparatus. The copying member is made of at least one of the plastic, the ceramic, the fiber, the wood, or the composite metal material, so that the copying member can provide good constraints for the battery cell.

The battery apparatus disclosed in the embodiments of the present application can be used in an electric device using a battery apparatus as a power supply or various energy storage systems using a battery apparatus as an energy storage component. The electric device can be, but is not limited to, a mobile phone, a tablet computer, a notebook computer, an electric toy, an electric tool, a battery-powered vehicle, an electric vehicle, a ship, a spacecraft, and the like. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

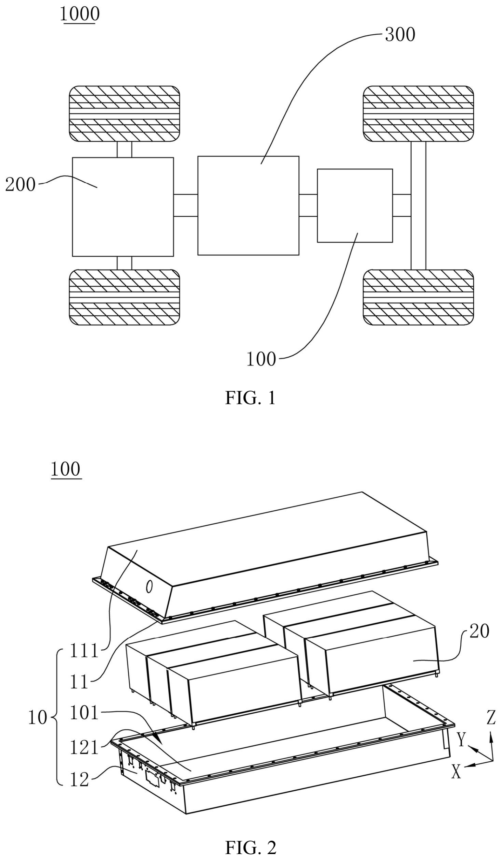

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery apparatus 100 is provided, which may be provided at the bottom, head, or tail of the vehicle 1000. The battery apparatus 100 may be used to power the vehicle 1000; for example, the battery apparatus 100 may be used as an operating power supply of the vehicle 1000. The vehicle 1000 may further include a controller 300 and a motor 200, the controller 300 being used to control the battery apparatus 100 to power the motor 200, e.g., for a working power requirement of the vehicle 1000 during starting, navigating, and driving.

In some embodiments of the present application, the battery apparatus 100 may be used not only as the operating power source of the vehicle 1000, but also as a driving power source of the vehicle 1000, instead of or partially instead of fuel or natural gas to provide driving power for the vehicle 1000.

Referring to FIG. 2, FIG.2 is an exploded schematic view of a battery apparatus 100 provided according to some embodiments of the present application. A battery apparatus mentioned in the embodiment of the present application may include one or more battery cell assemblies for providing voltage and capacity. The battery cell assembly may include a plurality of battery cells 20, the plurality of battery cells 20 being connected in series, in parallel, or in series-parallel by a busbar component.

In some embodiments, the battery cell assembly is usually formed by arranging the plurality of battery cells 20. For example, the battery cell assembly may be a battery module, a battery module being an independent module formed by arranging and fixing the plurality of battery cells 20. For example, the battery module may be formed by bundling the plurality of battery cells 20 by a cable tie.

In some embodiments, the battery apparatus 100 may be a battery pack, the battery pack including a box body 10 and one or more battery cell assemblies, and the battery cell assemblies being accommodated in the box body 10.

For example, the battery cell assembly may be a battery module, and the battery cell assembly may be accommodated in the box body by fixing the battery module in the box body 10.

For example, the battery cell assembly may alternatively be accommodated in the box body by directly fixing the plurality of battery cells 20 in the box body 10.

For example, the box body 10 may include an upper box body 11 and a lower box body 12. The upper box body 11 and the lower box body 12 are buckled, so that a closed accommodating chamber 101 is formed inside the box body 10 to accommodate the battery cell assembly. The term "closed" herein refers to covering or closing, which may be sealed or unsealed.

For example, the box body 10 may include a top cover, a frame, and a bottom plate. The top cover and the bottom plate are respectively connected to the frame, so that the closed accommodating chamber 101 is formed inside the box body 10 to accommodate the battery cell assembly.

For example, the box body 10 may be part of a chassis structure of the vehicle 1000. For example, the top cover of the box body 10 may be at least part of a floor of the vehicle 1000, or part of the box body 10 may be at least part of a cross beam and a longitudinal beam of the vehicle 1000.

In some embodiments, the battery apparatus 100 refers to an energy storage device, the energy storage device includes a box body 10, and at least one side of the box body 10 is provided with a door. The energy storage device includes an energy storage container, an energy storage cabinet, and the like.

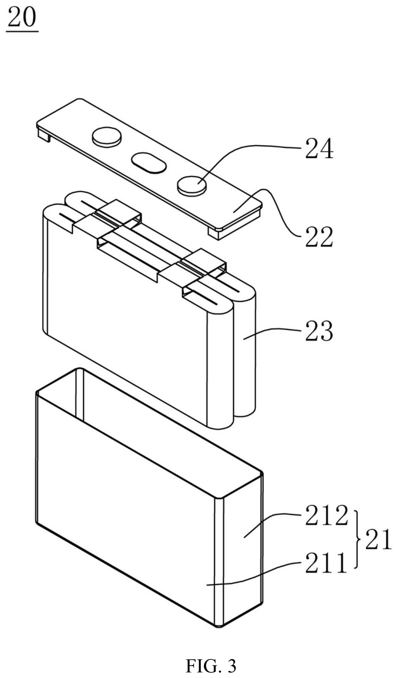

Referring to FIG. 3, FIG. 3 is an exploded schematic diagram of a battery cell 20 provided according to some embodiments of the present application. The battery cell 20 is a minimum unit constituting the battery apparatus 100. As shown in the figure, the battery cell 20 includes an end cap 22, a casing body 21, an electrode assembly 23, and other functional components.

The end cap 22 is a component that covers the opening of the casing body 21 to isolate the internal environment of the battery cell 20 from the external environment. Without limitation, the shape of the end cap 22 may adapt to the shape of the casing body 21 to fit the casing body 21. Optionally, the end cap 22 may be made of a material with certain hardness and strength (e.g., aluminum alloy). As such, the end cap 22 is less prone to deformation under compressive impact, thereby enabling the battery cell 20 to have higher structural strength and improved safety performance. The end cap 22 may be provided with a functional component such as an electrode terminal 24. The electrode terminal 24 may be configured to be electrically connected to the electrode assembly 23 for outputting electric energy from or inputting electric energy into the battery cell 20. In some embodiments, a pressure relief mechanism for relieving the internal pressure may be further disposed on the end cap 22 when the internal pressure or temperature of the battery cell 20 reaches a threshold. The end cap 22 may be made of various materials, such as copper, iron, aluminum, stainless steel, aluminum alloy, plastic, etc. The embodiments of the present application impose no special limitations thereto. In some embodiments, an insulation member may be further provided on an inner side of the end cap 22, and the insulation member may be used to isolate an electrical connection component in the casing body 21 from the end cap 22 to reduce the risk of a short circuit. For example, the insulation member may be plastic, rubber, etc.

The casing body 21 is an assembly for cooperating with the end cap 22 to form the internal environment of the battery cell 20, where the formed internal environment may be used to accommodate the electrode assembly 23, an electrolyte solution, and other components. The casing body 21 and the end cap 22 may be separate members, and an opening may be provided in the casing body 21, and the inner environment of the battery cell 20 may be formed by closing the end cap 22 at the opening. Without limitation, the end cap 22 and the casing body 21 may also be integrated. Specifically, the end cap 22 and the casing body 21 may form a joint connection surface before other components are fitted into the housing, and then the end cap 22 is enabled to cover the casing body 21 when an interior of the casing body 21 needs to be enclosed. The casing body 21 may be in various shapes and various dimensions, such as a cuboid, a cylinder, a hexagonal prism, and the like. Specifically, the shape of the casing body 21 may be determined according to a specific shape and dimension of the electrode assembly 23. The casing body 21 may be made of various materials, such as copper, iron, aluminum, stainless steel, aluminum alloy, plastic, and the like. This is not specially limited in the embodiments of the present application.

The electrode assembly 23 is a component in the battery cell 20 in which an electrochemical reaction occurs. The casing body 21 may comprise one or more electrode assemblies 23. The electrode assembly 23 is mainly formed by winding or stacking a positive electrode sheet and a negative electrode sheet, and a separator is generally disposed between the positive electrode sheet and the negative electrode sheet. Parts of the positive electrode plate and the negative electrode plate with an active material constitute a main body of the electrode assembly 23, and parts of the positive electrode plate and the negative electrode plate with no active material each constitute a tab. A positive tab and a negative tab may both be located at one end of the main body portion or be located at two ends of the main body portion respectively. During the charging and discharging process of the battery apparatus 100, a positive electrode active material and a negative electrode active material react with an electrolyte solution, and a tab 24 is connected to an electrode terminal to form a current circuit.

In a first aspect, referring to FIG. 2 to FIG. 4, an embodiment of the present application provides a battery apparatus 100, and the battery apparatus includes a box body 10, a battery cell 20, and a copying member 30. The plurality of battery cells 20 are provided in the box body 10, where the plurality of battery cells 20 are arranged at least in a first direction. The copying member 30 is accommodated in the box body 10, where the copying member 30 is configured to replace the battery cell 20, and the copying member 30 can abut against the adjacent battery cell 20 or the copying member 30. The copying member 30 is made of at least one of plastic, ceramic, fiber, wood, resin, or composite metal material.

In the figure, a direction of an X axis is a length direction of the battery apparatus 100, a direction of a Y axis is a width direction of the battery apparatus 100, and a direction of a Z axis is a height direction of the battery apparatus 100.

The box body 10 refers to a structure in the battery apparatus 100 for providing a fixed foundation for the battery cell 20 or another structure, and the box body 10 may be prismatic and cylindrical or may be of another shape. The box body 10 may be made of metal, plastic or another material.

The battery cell 20 is a minimum unit constituting the battery apparatus 100, and the shape of the battery cell 20 may be cuboid, and cylindrical, or may be of another shape. Two, three or more battery cells 20 may be provided.

When a plurality of battery cells 20 are provided, the plurality of battery cells 20 are arranged at least in a first direction, where the first direction may be parallel to a length direction X of the battery apparatus 100, or may be parallel to a width direction Y of the battery apparatus 100, or the first direction may be another direction. In addition to being arranged in the first direction, the plurality of battery cells 20 may also be arranged in other directions and form an array structure arranged in multiple directions.

The adjacent battery cells 20 can abut against each other in a natural non-operating state, or the adjacent battery cells 20 can be spaced apart from each other in a natural non-operating state and abut against each other in a charging and discharging state of the battery apparatus 100, that is, when the battery apparatus 100 is charged and discharged, the adjacent two battery cells 20 undergo expansion deformation and abut against each other to suppress the expansion deformation amount of each other. The two adjacent battery cells 20 may be in direct contact with and abut against each other. An intermediate structure may also be provided between the two adjacent battery cells 20, and the intermediate structure abuts against the adjacent battery cells 20, so that the adjacent battery cells 20 indirectly abut against each other through the intermediate structure. When the battery cells 20 expand during the charging and discharging process, the adjacent battery cells 20 abut against each other and can be constrained by their respective expansion forces, so as to suppress the expansion deformation of the battery cells 20 and reduce the damage that may be caused by the expansion of the battery cells 20.

The copying member 30 refers to a structural member used to replace the battery cells 20 in the battery apparatus 100, and the shape of the copying member 30 may be cuboid, and cylindrical, or may be of another shape, and the shape of the copying member 30 may also be configured according to the shape of the battery cell 20. One or more of the copying members 30 may be provided. One copying member 30 may be used to replace only one battery cell 20, and in this case, the volume of the copying member 30 is similar to the volume of one battery cell 20, or one copying member 30 may be used to replace two or more battery cells 20, and in this case, the volume of the copying member 30 is an integer multiple of the two or more battery cells 20.

Since the copying member 30 is mainly used to replace the battery cells 20 and occupy the vacant mounting position, the copying member 30 may not provide electric energy and only serve as a structural member, and in this case, the copying member 30 may be a dummy battery cell or a dummy cell, and is not electrically connected to the battery cells 20 having a charging and discharging capability. Since the copying member 30 does not need to be charged and discharged, and does not have expansion and contraction that may occur during the charging and discharging process, the copying member 30 can also reduce the extrusion of the adjacent battery cells 20.

Since the copying member 30 is mainly used to replace the battery cells 20, the shape of the copying member 30 may be similar to or the same as the shapes of the battery cells 20. For example, the battery cells 20 may be a battery cell, a blade battery cell, a cylindrical battery cell, a laminated battery cell, or another battery cell, and in this case, a shape of the copying member 30 may be configured according to the shapes of the battery cells 20.

The copying member 30 can abut against the adjacent battery cells 20 to suppress the deformation of the adjacent battery cells 20. The copying member 30 may abut against the adjacent battery cells 20 in a natural state in which the battery apparatus 100 does not operate, or the copying member 30 may be spaced apart from the adjacent battery cells 20 in a natural state in which the battery apparatus 100 does not operate, and abut against the adjacent battery cells 20 in a state in which the battery apparatus 100 is charged and discharged, that is, when the battery apparatus 100 is charged and discharged, the adjacent battery cells 20 undergo expansion deformation and abut against the copying member 30, and in this case, the copying member 30 can suppress further expansion deformation of the adjacent battery cells 20. The copying member 30 and the adjacent battery cells 20 may be in direct contact with and abut against each other, or an intermediate structure may be provided between the copying member 30 and the adjacent battery cells 20, and the intermediate structure abuts against the adjacent copying members 30 and the adjacent battery cells 20, so that the copying member 30 and the adjacent battery cells 20 indirectly abut against each other through the intermediate structure. When the battery cells 20 expand during the charging and discharging process, the copying member 30 can abut against the adjacent battery cells 20 to suppress the expansion deformation of the battery cells 20, thereby reducing the damage that may be caused by the expansion of the battery cells 20.

When the required capacity of the battery apparatus 100 is reduced, some of the battery cells 20 will be removed from the box body 10 or the module formed by the battery cells 20 and form vacant mounting positions, and in this case, the copying member 30 may be provided in the box body 10 or the module formed by the battery cells 20 to occupy the vacant mounting positions, and the deformation of the adjacent battery cells 20 is suppressed by the copying member 30. The mounting position refers to a space in which the battery cell 20 is mounted in the box body 10, one mounting position corresponds to one battery cell 20, the mounting position may be surrounded by a structure, or may be only a determined space, and the vacant mounting position is a mounting position in which the battery cell 20 is not mounted.

When the copying member 30 is provided in the battery apparatus 100, the copying member 30 and the battery cell 20 may form a module and the module is mounted into the box body 10. After the battery cells 20 are mounted in the box body 10, some of the battery cells 20 may be removed and replaced with the copying members 30.

When the copying member 30 is provided in the battery apparatus 100, the copying member 30 and other battery cells 20 may be simultaneously present on the peripheral side of the battery cell 20, and in this case, the battery cell 20 may abut against the other adjacent battery cells 20 and the copying member 30. The copying members 30 may also be provided on the peripheral sides of the battery cell 20, and in this case, the battery cell 20 may abut against the adjacent copying members 30.

It can be understood that other copying members 30 may also be provided on the peripheral sides of the copying member 30, and in this case, the copying member 30 may abut against other adjacent copying members 30.

The copying member 30 may be made of at least one of the plastic, the ceramic, the fiber, the wood, the resin, or the composite metal material, that is, the copying member 30 may be made of only one of the plastic, the ceramic, the fiber, the wood, or the composite metal material, or may be made of two or more of the above materials. Only part of the structure of the copying member 30 may be made of at least one of the plastic, the ceramic, the fiber, the wood, the resin, or the composite metal material, or the entire structure of the copying member 30 may be made of at least one of the plastic, ceramic, the fiber, the wood, the resin, or the composite metal material.

The plastic has the advantages of light weight and high strength, and can better suppress the expansion of the battery cell 20. Meanwhile, the plastic also has better insulation performance, thereby reducing the possible interference to the adjacent battery cells 20. The plastic may be a thermoplastic plastic, a thermosetting plastic or other plastics. The ceramic has the advantage of high strength, and can better suppress the expansion of the battery cell 20. Meanwhile, the ceramic has good wear resistance, chemical corrosion resistance and high temperature resistance, and can be adapted to the operating environment of the battery apparatus 100 and has a long service life. The fiber material has the advantages of light weight and high strength, can better suppress the expansion of the battery cell 20, and is also resistant to corrosion and aging, has a long service life and is easy to process. The wood has the advantages of light weight and high strength, and can better suppress the expansion of the battery cell 20. Meanwhile, the wood also has better insulation performance, thereby reducing the possible interference to the adjacent battery cells 20. The wood is also easy to process and mount. The resin has the advantages of light weight and high strength, can better suppress the expansion of the battery cell 20, and also has better flame retardant performance, thereby reducing the negative impact of thermal runaway of the battery cell 20 on the other adjacent battery cells 20.

The composite metal material may be a material obtained by compounding different metals. Compared with pure metals, most of the composite metal materials have higher strength and can better suppress the expansion of the battery cells 20. The composite metal material can also have different properties such as insulation and heat resistance according to different materials compounded.

According to the material of the copying member 30, when the copying member 30 is made of the plastic, the copying member 30 may be processed and formed by injection molding, extrusion, blow molding, calendering, thermoforming, and the like. When the copying member 30 is made of the ceramic, the copying member 30 may be processed and formed by pressing, casting, injection, or the like. When the copying member 30 is made of the fiber material, the copying member 30 may be processed and formed by hot pressing, pultrusion, die pressing or other methods. When the copying member 30 is made of the wood, the copying member 30 may be processed and formed by sawing, planing, milling, or the like. When the copying member 30 is made of the resin, the copying member 30 may be processed and formed by injection molding, extrusion, compression, blow molding, or the like.

In this embodiment, the battery apparatus 100 includes the copying member 30, and when a capacity of the battery apparatus 100 is reduced, the copying member 30 can occupy a vacant mounting position formed by reducing a quantity of the battery cells 20, and the copying member 30 provides constraints for the adjacent battery cell 20, thereby improving overall stability of the battery apparatus 100. The technical solution of this embodiment further provides some materials of the copying member 30, so that the copying member 30 can provide good constraints for the battery cell 20. Meanwhile, the copying member 30 is provided so that the battery apparatus 100 is not designed with different box bodies 10 of the battery apparatus 100 for different requirements, reducing the processing cost of the battery apparatus 100.

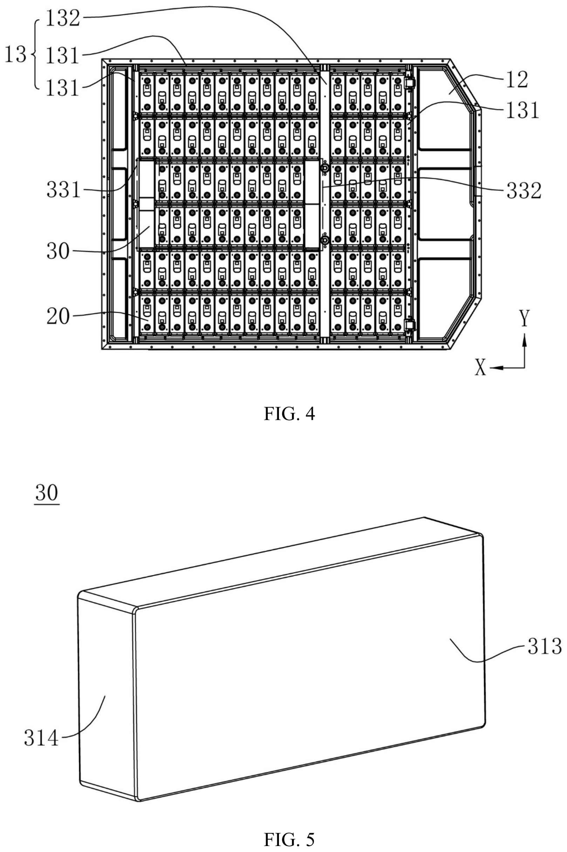

Referring to FIG. 5 to FIG. 10, in some embodiments, the copying member 30 includes a housing 31, the housing 31 is provided with an accommodating space 311, and the housing 31 is made of at least one of the plastic, the ceramic, the fiber, the wood, or the composite metal material.

The housing 31 refers to a structure in the copying member 30 for forming an internal space of the copying member 30, the housing 31 may also provide a fixed foundation for another structure of the copying member 30, the housing 31 may be a box structure, or a frame structure or the another structure, and after the copying member 30 is mounted in the box body 10, the housing 31 may abut against the adjacent battery cells 20. The copying member 30 may include only the housing 31, or another structure may be provided in the housing 31.

The shape of the housing 31 may be the same as or similar to the shape of the battery cell 20, so that the space occupied by the copying member 30 is the same as or similar to the battery cell 20, so that the copying member 30 can better provide support and constraints for the adjacent battery cell 20.

The accommodating space 311 refers to a space provided inside the housing 31, and the accommodating space 311 may be an open space having at least one opening, or may be a closed space. The accommodating space 311 may be a cuboid-shaped space, a cylindrical space, or a space of another shape. Only one, two or more accommodating spaces 311 may be provided.

The another structure may be accommodated in the accommodating space 311 to provide support for the housing 31 and improve the strength of the copying member 30, so that the copying member 30 can better provide support for the adjacent battery cells 20. The another structure may not be accommodated in the accommodating space 311 to reduce the weight of the copying member 30, thereby reducing the weight of the entire battery apparatus 100.

The housing 31 may be made of at least one of the plastic, the ceramic, fiber, the wood, the resin, or the composite metal material, that is, the housing 31 may be made of only one of the plastic, the ceramic, the fiber, the wood, the resin, or the composite metal material, or may be made of two or more of the above materials.

The plastic has the advantages of light weight and high strength, and can better suppress the expansion of the battery cell 20. Meanwhile, the plastic also has better insulation performance, thereby reducing the possible interference to the adjacent battery cells 20. The ceramic has the advantage of high strength, and can better suppress the expansion of the battery cell 20. Meanwhile, the ceramic has good wear resistance, chemical corrosion resistance and high temperature resistance, and can be adapted to the operating environment of the battery apparatus 100 and has a long service life. The fiber material has the advantages of light weight and high strength, can better suppress the expansion of the battery cell 20, and is also resistant to corrosion and aging, has a long service life and is easy to process. The wood has the advantages of light weight and high strength, and can better suppress the expansion of the battery cell 20. Meanwhile, the wood also has better insulation performance, thereby reducing the possible interference to the adjacent battery cells 20. The wood is also easy to process and mount. The resin has the advantages of light weight and high strength, can better suppress the expansion of the battery cell 20, and also has better flame retardant performance, thereby reducing the negative impact of thermal runaway of the battery cell 20 on the other adjacent battery cells 20.

The composite metal material may be a material obtained by compounding different metals. Compared with pure metals, most of the composite metal materials have higher strength and can better suppress the expansion of the battery cells 20. The composite metal material can also have different properties such as insulation and heat resistance according to different materials compounded.

When the another structure is provided in the housing 31, the another structure of the copying member 30 may be made of the plastic, the ceramic, the fiber, the wood, or the composite metal material, or may be made of another material.

In this embodiment, the copying member 30 includes the housing 31, and the accommodating space 311 is provided in the housing 31, so that the copying member 30 can not only provide good constraints for the battery cell 20, but also reduce the weight of the copying member 30, thereby reducing the negative influence of the copying member 30 on the overall weight of the battery apparatus 100.

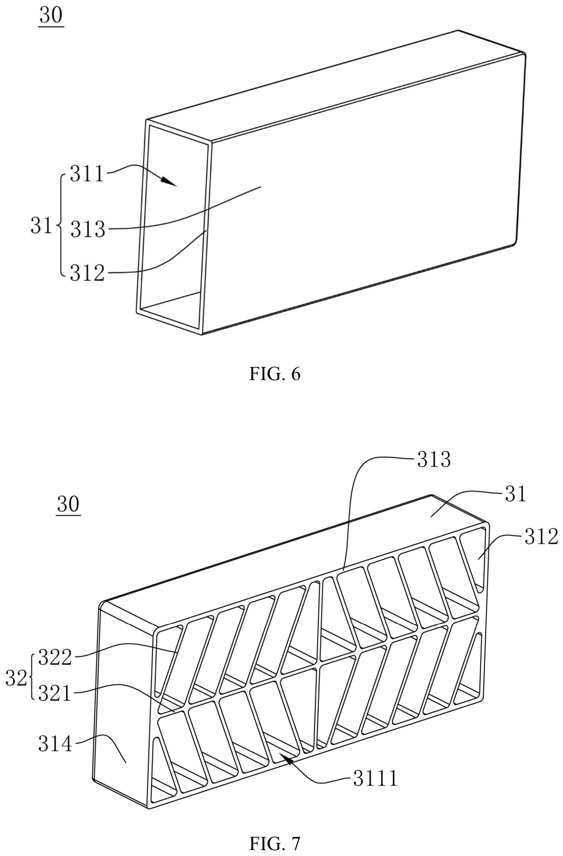

Referring to FIG. 7 to FIG. 10, in some embodiments, a reinforcing structure 32 connected to the housing 31 is provided in the accommodating space 311.

The reinforcing structure 32 refers to part of the structure of the copying member 30 located in the accommodating space 311, and the reinforcing structure 32 is configured to provide support for the housing 31 to improve the strength of the copying member 30, so that the copying member 30 can better provide support for the adjacent battery cells 20. According to the shape of the housing 31, the reinforcing structure 32 may abut against the adjacent battery cells 20 indirectly through the housing 31 or another intermediate structure, or the reinforcing structure 32 may abut against the adjacent battery cell 20 directly.

The reinforcing structure 32 may include a plate-shaped structure, a ribbed structure, or a structure of another shape. One, or two or more reinforcing structures 32 may be provided; and when there are a plurality of reinforcing structures 32, the length directions of the plurality of reinforcing structures 32 may also be the same or different. The reinforcing structure may be made of the plastic, the ceramic, the fiber, the wood, or the composite metal material, and may also be made of other materials.

After the copying member 30 is mounted in the box body 10, when the battery cell 20 expand, the deformation force generated by the expansion of the battery cell 20 can be transmitted to the reinforcing structure 32 through the housing 31 or directly transmitted to the reinforcing structure 32, and in this case, both the reinforcing structure 32 and the housing 31 can share the part of the deformation force generated by the adjacent battery cell 20 to improve the overall strength of the copying member 30, and can also suppress the expansion of the battery cell 20.

In this embodiment, the reinforcing structure 32 is provided in the accommodating space 311 to improve the overall strength of the copying member 30, thereby improving the support performance of the copying member 30 on the adjacent battery cells 20. When the battery cell 20 expands, the copying member 30 can better suppress the expansion of the battery cell 20, thereby reducing the possible damage to the battery cell 20.

Referring to FIG. 3 and FIG. 7 to FIG. 10, the battery cell 20 includes a casing body 21, the casing body 21 includes first walls 211 and second walls 212 that are located on a peripheral side of the battery cell 20 and that are sequentially connected end to end, areas of the first walls 211 are greater than areas of the second walls 212, the first walls 211 are spaced apart from each other in the first direction, the second walls 212 are spaced apart from each other in a second direction, and the second direction and the first direction are arranged at an included angle; and the housing 31 includes first surfaces 313 spaced apart from each other in the first direction, the reinforcing structure 32 includes a first reinforcing rib 321 connected to the housing 31, and the first reinforcing rib 321 and the first surface 313 are arranged at an included angle.

Both the first walls 211 and the second walls 212 are structures on the peripheral side of the casing body 21, and the areas of the first walls 211 are greater than the areas of the second wall 212, and when the battery cell 20 expands, the deformation amount of the first wall 211 is greater than the deformation amount of the second wall 212.

Since the areas of the first walls 211 are greater than the areas of the second walls 212, the first walls 211 are spaced apart from each other in the first direction, so that the length and width of the module formed by the plurality of battery cells 20 arranged in an array are relatively uniform. In this case, the second walls 212 are spaced apart from each other in the second direction, and the space between the two first walls 211 and the two second walls 212 is the space for accommodating the electrode assembly 23.

The second direction and the first direction are arranged at an included angle, and the second direction may be perpendicular to the first direction, or may be arranged at another included angle with the first direction. For example, the first direction may be the length direction X of the battery apparatus 100, and in this case, the second direction is the width direction Y of the battery apparatus 100. The first direction may also be the width direction Y of the battery apparatus 100, and in this case, the second direction is the length direction X of the battery apparatus 100. It can be understood that the first direction and the second direction may also be other directions.

For example, when the battery cell 20 is a cuboid-shaped prismatic battery cell 20, the housing 21 includes two first walls 211 and two second walls 212, the two first walls 211 and the two second walls 212 are sequentially connected end to end, the second direction may be perpendicular to the first direction, and the first walls 211 are perpendicular to the adjacent second walls 212, so that the casing body 21 is a cuboid-shaped structure.

The first reinforcing rib 321 refers to a partial structure in the reinforcing structure 32, and the first reinforcing rib 321 may be of a cylindrical structure, a prismatic structure, a rectangular plate structure, or a structure of another shape. One, two or more first reinforcing ribs 321 may be provided. Two ends of the first reinforcing rib 321 may be respectively connected to inner surfaces of the housing 31 in different directions, the first reinforcing rib 321 may be fixedly connected to the housing 31 by welding, bonding or other ways, or may be detachably connected to the housing 31 by screwing, clamping or other ways, and the first reinforcing rib 321 may also be integrally formed with the housing 31. The first reinforcing rib 321 may be made of the plastic, the ceramic, the fiber, the wood, the composite metal material, or other materials.

First surfaces 313 refer to surfaces of the housing 31 spaced apart from each other in the first direction, and since the first walls 211 of the casing body 21 are arranged in the first direction, the first surfaces 313 are surfaces of the housing 31 opposite to the first walls 211. When the housing 31 is of a box structure, the first surfaces 313 may be structure surfaces of the housing 31 facing the first walls 211, and when the housing 31 is of a frame structure, the first surfaces 313 may be surfaces surrounded by the frame structure facing the first walls 211.

The first reinforcing rib 321 and the first surface 313 are arranged at an included angle, that is, the length direction of the first reinforcing rib 321 is not parallel to the first surface 313 and can intersect with the first surface 313. When the copying member 30 is adjacent to the battery cell 20, the first surface 313 is adjacent to the first wall 211, and in this case, the length direction of the first reinforcing rib 321 is not parallel to the adjacent first wall 211 and can intersect with the adjacent first wall 211. The first reinforcing rib 321 may be perpendicular to the first surface 313, or may be arranged at another included angle with the first surface 313.

When the copying member 30 is adjacent to the battery cell 20, the first surface 313 is adjacent to the first wall 211, and in this case, the first reinforcing rib 321 may directly abut against the adjacent first wall 211, or may indirectly abut against the adjacent first wall 211 through the housing 31. For example, when a side of the housing 31 facing the adjacent first wall 211 has an opening, the first reinforcing rib 321 may extend to the opening to directly abut against the adjacent first wall 211. When the accommodating space 311 is a closed space, the first reinforcing rib 321 may be connected to the wall surface of the housing 31 opposite to the adjacent first wall 211, so as to indirectly abut against the adjacent first wall 211 through the housing 31.

When the battery cell 20 expands, this arrangement enables the first reinforcing rib 321 to directly abut against the adjacent first wall 211, or indirectly abut against the adjacent first wall 211 through the housing 31, so that the copying member 30 can better suppress the deformation of the first wall 211 of the adjacent battery cell 20 through the first reinforcing rib 321.

In this embodiment, the reinforcing structure 32 includes the first reinforcing rib 321, and the first reinforcing rib 321 and the first surface 313 are arranged at an included angle, so that the first reinforcing rib 321 suppresses the expansion deformation of the first wall 211. Since the first wall 211 with a larger area is more likely to deform and the deformation amount thereof is greater than that of the second wall 212 during the charging and discharging process of the battery cell 20, the first reinforcing rib 321 is provided to suppress the deformation of the first wall 211.

Referring to FIG. 7 to FIG. 10, in some embodiments, the housing 31 further includes second surfaces 314 spaced apart from each other in the second direction, and the first reinforcing rib 321 and the second surface 314 are arranged at an included angle.

Second surfaces 314 refer to surfaces of the housing 31 spaced apart from each other in the second direction, and since the second walls 212 of the casing body 21 are arranged in the second direction, the second surfaces 314 are surfaces of the housing 31 opposite to the second walls 212. When the housing 31 is of a box structure, the second surfaces 314 may be structure surfaces of the housing 31 facing the second walls 212, and when the housing 31 is of a frame structure, the second surfaces 314 may be surfaces surrounded by the frame structure facing the second walls 212.

When the first reinforcing rib 321 and the first surface 313 are arranged at an included angle, the first reinforcing rib 321 and the second surface 314 may also be arranged at an included angle, that is, the length direction of the first reinforcing rib 321 is not parallel to the second surface 314 and can intersect with the second surface 314. When the copying member 30 is adjacent to the battery cell 20, the second surface 314 is adjacent to the second wall 212, and in this case, the length direction of the first reinforcing rib 321 is not parallel to the adjacent second wall 212 and can intersect with the adjacent second wall 212. The first reinforcing rib 321 may be perpendicular to the second surface 314, or may be arranged at another included angle with the second surface 314.

When the copying member 30 is adjacent to the battery cell 20, the second surface 314 is adjacent to the second wall 212, and the first reinforcing rib 321 may directly abut against the adjacent second wall 212, or may indirectly abut against the adjacent second wall 212 through the housing 31. For example, when a side of the accommodating space 311 facing the adjacent second wall 212 has an opening, the first reinforcing rib 321 may extend to the opening to directly abut against the adjacent second wall 212. When the accommodating space 311 is a closed space, the first reinforcing rib 321 may be connected to the wall surface of the housing 31 opposite to the adjacent second wall 212, so as to indirectly abut against the adjacent second wall 212 through the housing 31.

When the battery cell 20 expands, this arrangement enables the first reinforcing rib 321 to directly abut against the adjacent second wall 212, or indirectly abut against the adjacent second wall 212 through the housing 31, so that the copying member 30 can better suppress the deformation of the second wall 212 of the adjacent battery cell 20 through the first reinforcing rib 321.

It can be understood that, since the battery cells 20 can be arranged in different directions on the peripheral side of the copying member 30, the first wall 211 facing the first surface 313 and the second wall 212 facing the second surface 314 can be structures on different battery cells 20, respectively.

In this embodiment, the first reinforcing rib 321 and the second surface 314 are arranged at the included angle, so that the first reinforcing rib 321 can not only provide support for the adjacent first walls 211 and suppress the deformation of the first wall 211, but also provide support for the adjacent second walls 212 and suppress the deformation of the second wall 212.

Referring to FIG. 7 to FIG. 10, in some embodiments, the reinforcing structure 32 further includes a second reinforcing rib 322 connected to the housing 31, the second reinforcing rib 322 intersects with the first reinforcing rib 321, and the second reinforcing rib 322 and the first surface 313 and/or the second surface 314 are arranged at an included angle.

Similar to the first reinforcing rib 321, the second reinforcing rib 322 also refers to a partial structure in the reinforcing structure 32, and the second reinforcing rib 322 may be of a cylindrical structure, a prismatic structure, a rectangular plate structure, or a structure of another shape. One, two or more second reinforcing ribs 322 may be provided. The second reinforcing rib 322 may be made of the plastic, the ceramic, the fiber, the wood, the composite metal material, or other materials.

Two ends of the second reinforcing rib 322 may be respectively connected to inner surfaces of the housing 31 in different directions, and the second reinforcing rib 322 may also be connected to the first reinforcing rib 321. The second reinforcing rib 322 may be fixedly connected to the housing 31 and/or the first reinforcing rib 321 by welding, bonding or other ways, or may be detachably connected to the housing 31 and/or the first reinforcing rib 321 by screwing, clamping or other ways, and the second reinforcing rib 322 may also be integrally formed with the housing 31 and the first reinforcing rib 321.

The second reinforcing rib 322 intersects with the first reinforcing rib 321, so that the force on the first reinforcing rib 321 can also be transmitted to the second reinforcing rib 322, the second reinforcing rib 322 can also share the deformation force generated by the deformation of the adjacent battery cell 20 and can further improve the strength and support performance of the copying member 30, and the copying member 30 can better suppress the deformation of the adjacent battery cell 20.

The second reinforcing rib 322 and the first surface 313 may be arranged at an included angle, that is, the length direction of the second reinforcing rib 322 is not parallel to the first surface 313 and can intersect with the first surface 313, that is, the length direction of the second reinforcing rib 322 is not parallel to the adjacent first wall 211 and can intersect with the adjacent first wall 211. The second reinforcing rib 322 may be perpendicular to the adjacent first wall 211, or may be arranged at another included angle with the adjacent first wall 211. The second reinforcing rib 322 may directly abut against the adjacent first wall 211, or may indirectly abut against the adjacent first wall 211 through the housing 31.

For example, when a side of the accommodating space 311 facing the adjacent first wall 211 has an opening, the second reinforcing rib 322 may extend to the opening to directly abut against the adjacent first wall 211. When the accommodating space 311 is a closed space, the second reinforcing rib 322 may be connected to the wall surface of the housing 31 opposite to the adjacent first wall 211, so as to indirectly abut against the adjacent first wall 211 through the housing 31.

When the copying member 30 is adjacent to the battery cell 20 and the battery cell 20 expands, this arrangement enables the second reinforcing rib 322 to directly abut against the adjacent first wall 211, or indirectly abut against the adjacent first wall 211 through the housing 31, so that the copying member 30 can better suppress the deformation of the first wall 211 of the adjacent battery cell 20 through the second reinforcing rib 322.

The second reinforcing rib 322 and the second surface 314 may also be arranged at an included angle, that is, the length direction of the second reinforcing rib 322 is not parallel to the second surface 314 and can intersect with the second surface 314. When the copying member 30 is adjacent to the battery cell 20, the length direction of the second reinforcing rib 322 is not parallel to the adjacent second wall 212 and can intersect with the adjacent second wall 212. The second reinforcing rib 322 may be perpendicular to the adjacent second wall 212, or may be arranged at another included angle with the adjacent second wall 212. The second reinforcing rib 322 may directly abut against the adjacent second wall 212, or may indirectly abut against the adjacent second wall 212 through the housing 31. For example, when a side of the accommodating space 311 facing the adjacent second wall 212 has an opening, the second reinforcing rib 322 may extend to the opening to directly abut against the adjacent second wall 212. When the accommodating space 311 is a closed space, the second reinforcing rib 322 may be connected to the wall surface of the housing 31 opposite to the adjacent second wall 212, so as to indirectly abut against the adjacent second wall 212 through the housing 31.

When the copying member 30 is adjacent to the battery cell 20 and the battery cell 20 expands, this arrangement enables the second reinforcing rib 322 to directly abut against the adjacent second wall 212, or indirectly abut against the adjacent second wall 212 through the housing 31, so that the copying member 30 can better suppress the deformation of the second wall 212 of the adjacent battery cell 20 through the second reinforcing rib 322.

According to the length direction of the second reinforcing rib 322, the second reinforcing rib 322 may be arranged at an included angle only with the first surface 313 or the second surface 314, or the second reinforcing rib 322 may be arranged at an included angle with both the first surface 313 and the second surface 314.

It can be understood that, in addition to the first reinforcing rib 321 and the second reinforcing rib 322, the reinforcing structure 32 may further include another structure to better improve the strength and support performance of the copying member 30.

In this embodiment, the reinforcing structure 32 further includes the second reinforcing rib 322 to further improve the overall strength of the copying member 30, so that the copying member 30 can better provide support for the adjacent battery cells 20.

Referring to FIG. 7 to FIG. 9, in some embodiments in which the reinforcing structure 32 includes the first reinforcing rib 321 and the second reinforcing rib 322, the first reinforcing rib 321 and the second reinforcing rib 322 may have multiple different arrangements.

Referring to FIG. 7, the accommodating space 311 in the figure has an opening on a surface of a larger area of the housing 31, that is, the accommodating space 311 has at least one opening facing the adjacent first wall 211.

The first reinforcing rib 321 can be perpendicular to the adjacent first wall 211, and the first reinforcing rib 321 can directly abut against the adjacent first wall 211. The first reinforcing rib 321 can also be perpendicular to the adjacent second wall 212, and the first reinforcing rib 321 can indirectly abut against the adjacent second wall 212 through the housing 31.

The second reinforcing rib 322 is connected to the first reinforcing rib 321, the second reinforcing rib 322 can be perpendicular to the adjacent first wall 211, and the second reinforcing rib 322 can directly abut against the adjacent first wall 211. The second reinforcing rib 322 can also be inclined relative to the adjacent second wall 212, part of the second reinforcing rib 322 can indirectly abut against the adjacent second wall 212 through the housing 31, and the remaining part of the second reinforcing rib 322 can share the force on the first reinforcing rib 321 and the housing 31.

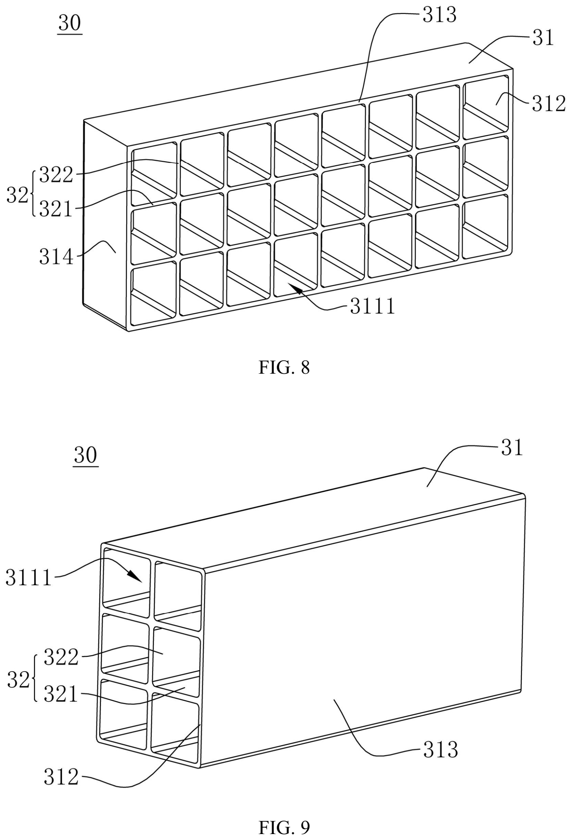

Referring to FIG. 8, the accommodating space 311 in the figure has an opening on a surface of a larger area of the housing 31, that is, the accommodating space 311 has at least one opening facing the adjacent first wall 211.

The first reinforcing rib 321 can be perpendicular to the adjacent first wall 211, and the first reinforcing rib 321 can directly abut against the adjacent first wall 211. The first reinforcing rib 321 can also be perpendicular to the adjacent second wall 212, and the first reinforcing rib 321 can indirectly abut against the adjacent second wall 212 through the housing 31.

The second reinforcing rib 322 is connected to the first reinforcing rib 321, the second reinforcing rib 322 can be perpendicular to the adjacent first wall 211, and the second reinforcing rib 322 can directly abut against the adjacent first wall 211. The second reinforcing rib 322 can also be parallel to the adjacent second wall 212, and the second reinforcing rib 322 can share the force on the first reinforcing rib 321 and the housing 31.

Referring to FIG. 9, the accommodating space 311 in the figure has an opening on a surface of a smaller area of the housing 31, that is, the accommodating space 311 has at least one opening facing the adjacent second wall 212.

The first reinforcing rib 321 can be perpendicular to the adjacent first wall 211, and the first reinforcing rib 321 can indirectly abut against the adjacent first wall 211 through the housing 31. The first reinforcing rib 321 can also be perpendicular to the adjacent second wall 212, and the first reinforcing rib 321 can directly abut against the adjacent second wall 212.

The second reinforcing rib 322 is connected to the first reinforcing rib 321, the second reinforcing rib 322 can be parallel to the adjacent first wall 211, and the second reinforcing rib 322 can share the force on the first reinforcing rib 321 and the housing 31. The second reinforcing rib 322 can also be perpendicular to the adjacent second wall 212, and the second reinforcing rib 322 can directly abut against the adjacent second wall 212.

It can be understood that, in addition to the above arrangement, the first reinforcing ribs 321 and the second reinforcing ribs 322 may also have other different arrangements, and are not limited to the above arrangements.

Referring to FIG. 7 to FIG. 10, in some embodiments, the accommodating space 311 is divided into at least two sub-spaces 3111 by the reinforcing structure 32.

The sub-space 3111 refers to a space structure formed inside the accommodating space 311, and the sub-space 3111 is formed by dividing the accommodating space 311 by the reinforcing structure 32, so that the reinforcing structure 32 cooperates with the housing 31 to enclose the sub-space 3111, or different reinforcing structures 32 are staggered to enclose the sub-space 3111. The sub-space 3111 may be a closed space or an open space having one or more openings. The sub-space 3111 may be of a prismatic space structure, a cylindrical space structure, or a space structure of another shape. According to the quantity and structure of the reinforcing structures 32, one, two or more sub-spaces 3111 may be provided.

In this embodiment, the reinforcing structure 32 can form two or more sub-spaces 3111 in the accommodating space 311, so that each sub-space 3111 can be used to absorb part of energy generated by the expansion deformation or displacement of the adjacent battery cells 20, so that the copying member 30 can better constrain the adjacent battery cells 20 and provide support for the adjacent battery cells 20.

Referring to FIG. 7 to FIG. 10, in some embodiments, the reinforcing structure 32 is made of at least one of metal, the plastic, the ceramic, the fiber, the wood, the resin, or the composite metal material.

The reinforcing structure 32 may be made of at least one of the plastic, the ceramic, fiber, the wood, the resin, or the composite metal material, that is, the reinforcing structure 32 may be made of only one of the plastic, the ceramic, the fiber, the wood, the resin, or the composite metal material, or may be made of two or more of the above materials. Only part of the structure of the reinforcing structure 32 may be made of at least one of the plastic, the ceramic, the fiber, the wood, the resin, or the composite metal material, or the entire structure of the reinforcing structure 32 may be made of at least one of the plastic, the ceramic, the fiber, the wood, the resin, or alloy metal material. For example, only the first reinforcing rib 321 or the second reinforcing rib 322 may be made of at least one of the plastic, the ceramic, the fiber, the wood, the resin, or the composite metal material.

The plastic has the advantages of light weight and high strength, and can better suppress the expansion of the battery cell 20. Meanwhile, the plastic also has better insulation performance, thereby reducing the possible interference to the adjacent battery cells 20. The ceramic has the advantage of high strength, and can better suppress the expansion of the battery cell 20. Meanwhile, the ceramic has good wear resistance, chemical corrosion resistance and high temperature resistance, and can be adapted to the operating environment of the battery apparatus 100 and has a long service life. The fiber material has the advantages of light weight and high strength, can better suppress the expansion of the battery cell 20, and is also resistant to corrosion and aging, has a long service life and is easy to process. The wood has the advantages of light weight and high strength, and can better suppress the expansion of the battery cell 20. Meanwhile, the wood also has better insulation performance, thereby reducing the possible interference to the adjacent battery cells 20. The wood is also easy to process and mount. The resin has the advantages of light weight and high strength, can better suppress the expansion of the battery cell 20, and also has better flame retardant performance, thereby reducing the negative impact of thermal runaway of the battery cell 20 on the other adjacent battery cells 20.

The composite metal material may be a material obtained by compounding different metals. Compared with pure metals, most of the composite metal materials have higher strength and can better suppress the expansion of the battery cells 20. The composite metal material can also have different properties such as insulation and heat resistance according to different materials compounded.

This embodiment provides some materials of the reinforcing structure 32, so that the reinforcing structure 32 has high strength and can provide good constraints for the battery cell 20.

Referring to FIG. 5, in some embodiments, an accommodating chamber 101 is filled with a filling material.

The filling material refers to a material accommodated in the accommodating space 311, and the filling material may be a liquid, a solid-liquid mixture, solid particles or other structural materials. The filling material may be used to fill only part of the accommodating space 311 or may be used to completely fill the entire accommodating space 311.

Only the filling material may be provided in the accommodating space 311, or the reinforcing structure 32 and the filling material may be simultaneously provided in the accommodating space, and in this case, the filling material may be filled in the gap between the reinforcing structures 32, for example, the filling material may be filled in the sub-space 3111.

When the battery cell 20 undergoes expansion deformation, part of the deformation force generated by the expansion of the battery cell 20 can be transmitted to the filling material through the housing 31, so that the filling material can also share part of the force borne by the housing 31, the strength of the housing 31 is improved, and the copying member 30 can better suppress the deformation of the battery cell 20.

When the filling material is in a form of a liquid or a solid-liquid mixture, the filling material can also absorb part of the energy generated by the expansion of the battery cell 20 to better improve the strength of the copying member 30, and the filling material in the liquid or solid-liquid mixture state can also balance the internal temperature of the box body 10.

When the filling material is in a solid powdery or granular structure, gaps of the filling material can also absorb the part of the energy generated by the expansion of the battery cell 20, thereby better improving the strength of the copying member 30.

In this embodiment, the accommodating chamber 101 is filled with the filling material, so that the support performance of the copying member 30 is improved by the filling material, and the copying member 30 can better provide support for the adjacent battery cells 20.

In some embodiments, the filling material includes at least one of the metal, the plastic, the ceramic, the fiber, the wood, foam, or the composite metal material.

The filling material may be made of at least one of the plastic, the ceramic, the fiber, the wood, the foam, or the composite metal material, that is, the filling material may be made of only one of the plastic, the ceramic, the fiber, the wood, the foam, or the composite metal material, or may be made of two or more of the above materials.

The plastic has the advantages of light weight and high strength, and can better suppress the expansion of the battery cell 20. Meanwhile, the plastic also has better insulation performance, thereby reducing the possible interference to the adjacent battery cells 20. The ceramic has the advantage of high strength, and can better suppress the expansion of the battery cell 20. Meanwhile, the ceramic has good wear resistance, chemical corrosion resistance and high temperature resistance, and can be adapted to the operating environment of the battery apparatus 100 and has a long service life. The fiber material has the advantages of light weight and high strength, can better suppress the expansion of the battery cell 20, and is also resistant to corrosion and aging, has a long service life and is easy to process. The wood has the advantages of light weight and high strength, and can better suppress the expansion of the battery cell 20. Meanwhile, the wood also has better insulation performance, thereby reducing the possible interference to the adjacent battery cells 20. The wood is also easy to process and mount. The foam material has good buffering and shock absorption performance, and can better absorb the deformation force generated by the expansion of the battery cell 20.

The composite metal material may be a material obtained by compounding different metals. Compared with pure metals, most of the composite metal materials have higher strength and can better suppress the expansion of the battery cells 20. The composite metal material can also have different properties such as insulation and heat resistance according to different materials compounded.

This embodiment provides some materials of the filling material, so that the filling material can better improve the support performance of the copying member 30, and the copying member 30 can better provide support for the adjacent battery cells 20.

Referring to FIG. 5 to FIG. 10, in some embodiments, a closed accommodating space 311 is formed in the housing 31; or the housing 31 is provided with at least one opening to form an open accommodating space 311.

The housing 31 may be provided with one or more openings, so that the accommodating space 311 is an open space that can communicate with a space outside the copying member 30. The openings are provided in a same side of the housing 31, or may be provided in different sides of the housing 31. When the accommodating space 311 is an open space, the first surface 313 of the housing 31 may be provided with the opening, that is, the accommodating space 311 has at least one opening facing the adjacent first wall 211, so that the reinforcing structure 32 can directly abut against the adjacent first wall 211 at the opening. The accommodating space 311 may also be provided with the opening on the second surface 314 of the housing 31, that is, the accommodating space 311 has at least one opening facing the adjacent second wall 212, so that the reinforcing structure 32 can directly abut against the adjacent second wall 212 at the opening.

When the accommodating space 311 is a closed space, the reinforcing structure 32 is connected to the inner surface of the housing 31 and indirectly abuts against the adjacent battery cell 20 through the housing 31. In this case, a contact area between the copying member 30 and the adjacent battery cell 20 is large, thereby alleviating stress concentration.

This embodiment provides some different structures of the accommodating space 311, so that the copying member 30 can not only provide support for the adjacent battery cells 20, but also have light weight, and is easy to process.

Referring to FIG. 5 to FIG. 10, in some embodiments, the housing 31 includes a side wall 312, the side wall 312 is located on a side of the housing 31 facing the adjacent battery cell 20, and the side wall 312 can abut against the corresponding battery cell 20.

The side wall 312 refers to a structure in the housing 31 that is located on the peripheral side of the housing 31 and faces the adjacent battery cell 20, where the housing 31 may include one side wall 312, or may include two or more side walls 312. When the housing 31 includes the side walls 312, the first surface 313 or the second surface 314 may be a surface of the side wall 312 facing away from the copying member 30.

The side wall 312 can abut against the adjacent battery cell 20 to increase the contact area between the copying member 30 and the battery cell 20. The side wall 312 may abut against the adjacent battery cells 20 in a natural state in which the battery apparatus 100 does not operate, or the side wall 312 may be spaced apart from the adjacent battery cells 20 in a natural state in which the battery apparatus 100 does not operate, and abut against the adjacent battery cells 20 in a state in which the battery apparatus 100 is charged and discharged, that is, when the battery apparatus 100 is charged and discharged, the adjacent battery cells 20 undergo expansion deformation and abut against the side wall 312, and in this case, the side wall 312 can suppress further expansion deformation of the adjacent battery cells 20. The side wall 312 and the adjacent battery cells 20 may be in direct contact with and abut against each other. An intermediate structure may also be provided between the side wall 312 and the adjacent battery cells 20, and the intermediate structure abuts against the adjacent side wall 312 and the adjacent battery cells 20, so that the side wall 312 and the adjacent battery cells 20 indirectly abut against each other through the intermediate structure. The peripheral sides of the housing 31 having the battery cells 20 may be respectively provided with the side wall 312, so that the side wall 312 can abut against the adjacent battery cell 20 to increase the contact area between the copying member 30 and the battery cell 20.

For example, when the copying member 30 is located at a corner position of the box body 10, two adjacent sides of the copying member 30 are respectively adjacent to side walls 312 of the two box bodies 10, and in this case, the housing 31 may only have two side walls 312, and the two side walls 312 are adjacent, so that the two side walls 312 respectively abut against the two adjacent battery cells 20.

For example, when the copying member 30 is located at the edge of the box body 10, the adjacent side of the copying member 30 is adjacent to the side wall 312 of the box body 10, and in this case, the housing 31 may have three side walls 312, so that the three side walls 312 respectively abut against the three adjacent battery cells 20.

For example, when the copying member 30 is located in the middle of the box body 10, the battery cells 20 are provided around the copying member 30, and in this case, the housing 31 has four side walls 312 and respectively abuts against the adjacent battery cells 20.

When the reinforcing structure 32 is provided in the accommodating space 311, since the reinforcing structure 32 is a plate-shaped structure, a columnar structure or other structures, the reinforcing structure 32 directly abuts against the adjacent battery cell 20, which is likely to cause stress concentration. After the side wall 312 is provided, the reinforcing structure 32 is connected to the side wall 312, and the copying member 30 abuts against the adjacent battery cell 20 through the side wall 312, which increases the contact area between the copying member 30 and the adjacent battery cell 20 and alleviates the stress concentration. Thus, the copying member 30 can not only provide support for the adjacent battery cell 20, but also reduce the damage to the adjacent battery cell 20.

In this embodiment, the housing 31 includes the side wall 312, and the side wall 312 abuts against the adjacent battery cell 20 to increase the contact area between the copying member 30 and the adjacent battery cell 20, thereby reducing the stress concentration. This arrangement enables the copying member 30 to not only suppress the deformation of the adjacent battery cells 20, but also reduce the damage to the adjacent battery cells 20.

In some embodiments, the copying member 30 is of a solid structure.

The copying member 30 is of a solid structure, that is, there is no space inside the copying member 30, and this arrangement can better provide support for the adjacent battery cells 20 to suppress the deformation of the adjacent battery cells 20. Meanwhile, the solid copying member 30 is also not prone to deformation damage. Even if the copying member 30 suffers from collision damage, it is unlikely to have negative impact on the support performance thereof, thereby improving the stability of the copying member 30.

Referring to FIG. 4, in some embodiments, a shape of the copying member 30 is the same as a shape of the battery cell 20.

The shape of the copying member 30 is the same as the shape of the battery cell 20, indicating that the copying member 30 and the battery cell 20 have a same geometric shape. The dimensions of the copying member 30 and the dimensions of the battery cell 20 are also set to be equal or in equal proportions.

For example, when the battery cell 20 is a prismatic battery cell 20, the copying member 30 is of a cuboid-shaped structure. In this case, the length, width and height of the copying member 30 are equal to the length, width and height of the battery cell 20, or the length, width and height of the copying member 30 are equal to the length, width and height of the battery cell 20.

For example, when the battery cell 20 is a cylindrical battery cell 20, the copying member 30 is of a cylindrical structure. In this case, the height and radius of the copying member 30 are equal to the height and radius of the battery cell 20, or the ratio of the height and radius of the copying member 30 is equal to the ratio of the corresponding height and radius of the battery cell 20.

When the battery cell 20 is removed to reduce the capacity of the battery apparatus 100, the shape of the copying member 30 is the same as the shape of the battery cell 20, so that the copying member 30 can be conveniently mounted on the vacant mounting position, and the copying member 30 can support the adjacent battery cell 20 after being mounted. The shape of the copying member 30 being the same as the shape of the battery cell 20 can not only reduce the mounting difficulty and complexity of the copying member 30, but also enables the copying member 30 to provide support for the adjacent battery cells 20 and suppress the deformation of the adjacent battery cells 20.

In this embodiment, the shape of the copying member 30 is the same as the shape of the battery cell 20, so that the copying member 30 can better occupy the vacant mounting position, and the gap between the copying member 30 and the adjacent battery cell 20 can be reduced. This arrangement enables the copying member 30 to better provide support for the adjacent battery cell 20, so as to suppress the deformation of the adjacent battery cell 20.

In some embodiments in which the shape of the copying member 30 is the same as the shape of the battery cell 20, the ratio of the volume of the copying member 30 to the volume of the battery cell 20 ranges from 0.9 to 1.1.

The volume of the battery cell 20 refers to the volume of the space enclosed by the surface of the casing body 21 of the battery cell 20 facing the outside and the surface of the end cover 22 facing the outside, that is, the product of the length, width and height of the battery cell 20, and the volume of the copying member 30 refers to the product of the length, width and height of the copying member 30. The ratio of the volume of the copying member 30 to the volume of the battery cell 20 may be 0.9, 0.95, 1.0, 1.05, 1.1, or other values.

For example, the ratio of the volume of the copying member 30 to the volume of the battery cell 20 may be 0.9, and in this case, the volume of the copying member 30 is less than the volume of the battery cell 20, and this arrangement can reduce the mounting difficulty of the copying member 30 into the vacant mounting position, so as to reduce the mounting difficulty of the copying member 30.

For example, the ratio of the volume of the copying member 30 to the volume of the battery cell 20 may be 1.0, and in this case, the volume of the copying member 30 is equal to the volume of the battery cell 20, and the copying member 30 can better replace the battery cell 20, so that the battery cell 20 and the copying member 30 form a module and the module is mounted into the box body 10. Meanwhile, the copying member 30 has a same volume as the battery cell 20, so that the copying member 30 can provide support for the other adjacent battery cells 20 in the same way as the battery cell 20.

For example, the ratio of the volume of the copying member 30 to the volume of the battery cell 20 may be 1.1, and in this case, the volume of the copying member 30 is greater than the volume of the battery cell 20, so that the copying member 30 can better provide support for the adjacent battery cell 20, and better suppress the expansion deformation of the adjacent battery cell 20.

The embodiment provides some ranges of the volume ratio between the copying member 30 and the battery cell 20, so as to reduce the processing difficulty of the copying member 30, and the copying member 30 can also constrain the adjacent battery cells 20 and suppress the deformation of the adjacent battery cells 20.

In some embodiments in which the shape of the copying member 30 is the same as the shape of the battery cell 20, in the first direction, the ratio of the dimension of the copying member 30 to the dimension of the battery cell 20 ranges from 0.9 to 1.1; and/or in the second direction, the ratio of the dimension of the copying member 30 to the dimension of the battery cell 20 ranges from 0.9 to 1.1, and the second direction and the first direction are arranged at the included angle.

The first direction is an arrangement direction of the battery cells 20, and is also an arrangement direction of the first walls 211 of the battery cells 20. In the first direction, the ratio of the dimension of the copying member 30 to the dimension of the battery cell 20 ranges from 0.9 to 1.1, for example, the ratio may be 0.9, 0.95, 1.0, 1.05, 1.1, or other values.

For example, in the first direction, the ratio of the dimension of the copying member 30 to the dimension of the battery cell 20 may be 0.9, and in this case, the dimension of the copying member 30 in the first direction is smaller than the dimension of the battery cell 20, and this arrangement can reduce the mounting difficulty of the copying member 30 into the vacant mounting position, so as to reduce the mounting difficulty of the copying member 30. Meanwhile, the extrusion of the first wall 211 of the battery cell 20 by the copying member 30 can also be reduced.

For example, in the first direction, the ratio of the dimension of the copying member 30 to the dimension of the battery cell 20 may be 1.0, and in this case, the dimension of the copying member 30 in the first direction is equal to the dimension of the battery cell 20, and the copying member 30 can better replace the battery cell 20, so that the battery cell 20 and the copying member 30 form a module and the module is mounted into the box body 10. Meanwhile, the copying member 30 has a same dimension as the battery cell 20 in the first direction, so that the copying member 30 can provide support for the other adjacent battery cells 20 in the same way as the battery cell 20.

For example, in the first direction, the ratio of the dimension of the copying member 30 to the dimension of the battery cell 20 may be 1.1, and in this case, the dimension of the copying member 30 in the first direction is greater than the dimension of the battery cell 20, and the copying member 30 can better provide support for the first walls 211 of the adjacent battery cells 20, and better suppress the expansion deformation of the adjacent battery cells 20 at the first walls 211.

The second direction is a direction in which the second wall 212 of the battery cell 20 is arranged. In the second direction, the ratio of the dimension of the copying member 30 to the dimension of the battery cell 20 ranges from 0.9 to 1.1, for example, the ratio may be 0.9, 0.95, 1.0, 1.05, 1.1, or other values.

For example, in the second direction, the ratio of the dimension of the copying member 30 to the dimension of the battery cell 20 may be 0.9, and in this case, the dimension of the copying member 30 in the second direction is smaller than the dimension of the battery cell 20, and this arrangement can reduce the mounting difficulty of the copying member 30 into the vacant mounting position, so as to reduce the mounting difficulty of the copying member 30. Meanwhile, the extrusion of the second wall 212 of the battery cell 20 by the copying member 30 can also be reduced.

For example, in the second direction, the ratio of the dimension of the copying member 30 to the dimension of the battery cell 20 may be 1.0, and in this case, the dimension of the copying member 30 in the second direction is equal to the dimension of the battery cell 20, and the copying member 30 can better replace the battery cell 20, so that the battery cell 20 and the copying member 30 form a module and the module is mounted into the box body 10. Meanwhile, the copying member 30 has a same dimension as the battery cell 20 in the second direction, so that the copying member 30 can provide support for the other adjacent battery cells 20 in the same way as the battery cell 20.

For example, in the second direction, the ratio of the dimension of the copying member 30 to the dimension of the battery cell 20 may be 1.1, and in this case, the dimension of the copying member 30 in the second direction is greater than the dimension of the battery cell 20, and the copying member 30 can better provide support for the second walls 212 of the adjacent battery cells 20, and better suppress the expansion deformation of the adjacent battery cells 20 at the second walls 212.

This embodiment provides some ranges of the dimension ratio between the copying member 30 and the battery cell 20, so as to reduce the processing difficulty of the copying member 30, and the copying member 30 can also constrain the adjacent battery cells 20 and suppress the deformation of the adjacent battery cells 20.

Referring to FIG. 4, in some embodiments, a beam body 13 is provided in the box body 10, and at least one side of the copying member 30 abuts against the beam body 13.

The beam body 13 refers to a beam structure provided in the box body 10, the beam body 13 may be located inside the box body 10 to provide support for the box body 10 or suppress expansion of the battery cell 20, and the beam body 13 may also be located at the edge of the box body 10 to protect the peripheral side of the battery apparatus 100 and cooperatively form the accommodating chamber 101. The beam body 13 may include an I-beam, a box beam or a beam structure of another shape. One, two or more beam bodies 13 may be provided. The beam body 13 may be made of the metal, the plastic or another material.

The copying member 30 abuts against the beam body 13, the copying member 30 may be in direct contact with the beam body 13 and abut against the beam body 13, or an intermediate structure may be provided between the copying member 30 and the beam body 13, so that the copying member 30 indirectly abuts against the beam body 13 through the intermediate structure, and the intermediate structure may be a structural member, or may be a structure formed by a processing technology such as welding or bonding (for example, a weld seam or a glue layer).

At least one side of the copying member 30 abuts against the beam body 13, that is, only one side of the copying member 30 may abut against the beam body 13, or both sides of the copying member 30 may abut against the different beam bodies 13, or multiple sides of the copying member 30 may abut against the different beam bodies 13 respectively; the copying member 30 abuts against the beam body 13, so that the copying member 30 can transmit part of the force received by the copying member 30 to the abutted beam body 13, the beam body 13 can also share the force received by part of the copying member 30, thereby better improving the support performance of the copying member 30.

In this embodiment, at least one side of the copying member 30 abuts against the beam body 13 to reduce the quantity of the battery cells 20 on the peripheral side of the copying member 30, thereby reducing the mounting difficulty of the copying member 30. Meanwhile, part of a deformation force exerted on the adjacent battery cells 20 by the copying member 30 can also be transmitted to the adjacent beam body 13; and in other words, the beam body 13 can provide support for the copying member 30, so that the copying member 30 can better support the adjacent battery cells 20.

Referring to FIG. 4, in some embodiments, the beam body 13 includes an expansion beam 132 located between the two adjacent battery cells 20; and/or the beam body 13 includes a side beam 131 located on a peripheral side of the box body 10, and the side beam 131 is adjacent to the battery cell 20 and/or the copying member 30.

The expansion beam 132 refers to a beam structure in the box body 10 for suppressing the expansion of the battery cell 20, and one, two or more expansion beams 132 may be provided. The length direction of the expansion beam 132 may be parallel to the length direction X of the battery apparatus 100, or may be parallel to the width direction Y of the battery apparatus 100; or the length direction of the expansion beam 132 may be set in another direction. The expansion beam 132 is located between the two adjacent battery cells 20, that is, the battery cells 20 are arranged on both sides of the expansion beam 132, to suppress expansion deformation of the battery cells 20 on the two adjacent sides of the expansion beam 132. The expansion beam 132 may be an I-beam, a box beam or a beam structure of another shape. The expansion beam 132 may be made of the metal, the plastic or another material.

The side beam 131 refers to a beam structure located on a peripheral side of the box body 10, and the side beam 131 mainly encloses the accommodating chamber 101 and protects the battery cell 20. According to the shape of the box body 10, three, four or more side beams 131 may be provided, and the plurality of side beams 131 can be sequentially connected end to end and form the accommodating chamber 101 therein. The side beam 131 may be an I-beam, a box beam or a beam structure of another shape. The side beam 131 may be made of the metal, the plastic or another material.

The side beam 131 is adjacent to the battery cell 20 and/or the copying member 30, that is, in the module formed by the battery cell 20 and the copying member 30, the side beam 131 is located on the peripheral side of the module and is adjacent to the module. It can be understood that, according to different structures of the box body 10, the side beam 131 may be used as a side structure of the box body 10 and face outside the box body 10, the side beam 131 may also be located in the box body 10, and a side of the side beam 131 away from the battery cell 20 or the copying member 30 is further provided with a beam structure of another box body 10.

The copying member 30 may abut against only the side beam 131 or the expansion beam 132, or may be in contact with the side beam 131 and the expansion beam 132 simultaneously. For example, two adjacent sides of the copying member 30 may respectively abut against two adjacent side beams 131, and in this case, the copying member 30 is located at a corner position of the box body 10. For example, one adjacent side of the copying member 30 may abut against one side beam 131, and in this case, the copying member 30 is located at an edge position of the box body 10. For example, the two adjacent sides of the copying member 30 may respectively abut against one side beam 131 and one expansion beam 132, and in this case, the copying member 30 is located in the middle of the edge of the box body 10.

This embodiment provides some specific structures of the beam body 13, so that the beam body 13 may be a side beam 131, and in this case, the copying member 30 is located at an edge of the battery apparatus 100. The beam body 13 may also be the expansion beam 132, and in this case, the copying member 30 is located in the middle of the battery apparatus 100, so that the copying member 30 can suppress deformation of the adjacent battery cells 20 at different positions of the battery apparatus 100.

Referring to FIG. 4, in some embodiments, in the width direction of the box body 10, the copying member 30 is located in the middle of the box body 10; and/or in a length direction of the box body 10, the copying member 30 is located in the middle of the box body 10.

In the figure, a first position 331 and a second position 332 are respectively located at different mounting positions of the copying member 30. In addition to the first position 331 and the second position 332, the copying member 30 may also be mounted at other positions.

The copying member 30 may be located in the middle of the box body 10 in the width direction Y of the box body 10, that is, at the first position 331 in the figure. The copying member 30 may also be located in the middle of the box body 10 along the length direction X of the box body 10. The copying member 30 may also be located in the middle of the box body 10 in both the length direction X and the width direction Y, that is, at the second position 332 in the figure.

Since the plurality of battery cells 20 in the box body 10 have substantially the same expansion cycle during the charging and discharging process of the battery apparatus 100, the deformation force generated by the expansion of each battery cell 20 is likely to accumulate and increase in the middle region of the box body 10. Accordingly, the copying member 30 is arranged in the middle region of the box body 10 in the length direction X and/or the width direction Y, so that the relatively large deformation force can act on the copying member 30, to replace the battery cell 20 by the copying member 30 to protect the battery cell 20; and the copying member 30 can also provide support for the adjacent battery cells 20 in the middle of the box body 10, to suppress the accumulation and transmission of the deformation force.

This embodiment provides some positions of the copying member 30, so that the copying member 30 is located in the middle of the box body 10 in the length direction and/or the width direction, and the copying member 30 can better suppress the accumulation and transmission of the deformation force. Meanwhile, the copying member 30 can also replace the battery cell 20 with a larger force at the corresponding position in the middle of the box body 10, so as to reduce the risk of damage to the battery cell 20 in the middle of the box body 10, thereby improving the overall stability of the battery apparatus 100.

In some embodiments, each peripheral side of the copying member 30 abuts against the adjacent battery cells 20.

Each peripheral side of the copying member 30 abuts against the adjacent battery cells 20, that is, the copying member 30 is located in the middle or near the middle of the box body 10, and in this case, the copying member 30 can provide support for the adjacent battery cells 20 and can withstand the deformation force of each battery cell 20 on the peripheral side.

Since the plurality of battery cells 20 in the box body 10 have substantially the same expansion cycle during the charging and discharging process of the battery apparatus 100, the deformation force generated by the expansion of each battery cell 20 is likely to accumulate and increase in the middle region of the box body 10. Accordingly, this embodiment provides other some positions of the copying member 30, and the battery cells 20 are provided on each peripheral side of the copying member 30, so that the copying member 30 can be located in the middle or near the middle of the box body 10, and the copying member 30 can provide support for each adjacent battery cell 20. Meanwhile, this arrangement can also reduce the mutual influence between the battery cells 20.

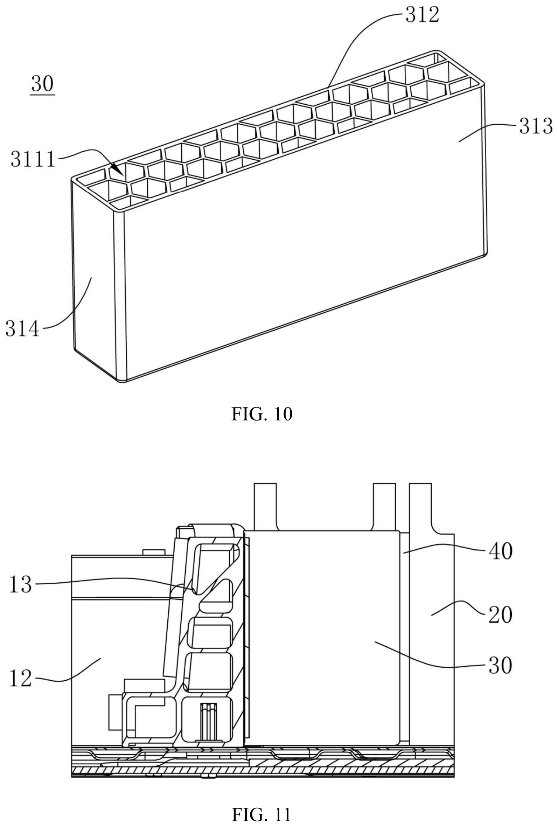

Referring to FIG. 11, in some embodiments, the battery apparatus 100 further includes a buffer member 40; the buffer member 40 is provided between the two adjacent battery cells 20, and/or the buffer member 40 is provided between the copying member 30 and the adjacent battery cells 20.

The buffer member 40 refers to a structure for dispersing the deformation force in the battery apparatus 100, the buffer member 40 may be a plate-shaped structure or another structure, and the shape of the buffer member 40 may be square, circular or another shape. The buffer member 40 may be made of the metal, the plastic or another material.

The buffer member 40 may be provided between the two adjacent battery cells 20, or may be provided between the battery cells 20 and an adjacent copying member 30. The buffer member 40 may only abut against the two adjacent battery cells 20 or the adjacent battery cell 20 and the adjacent copying member 30, that is, the buffer member 40 is sandwiched by the two adjacent battery cells and the adjacent copying member, and the buffer member 40 may also be connected to the adjacent battery cells 20 and/or the copying member 30 by bonding or other ways.

When the battery cells 20 undergo expansion deformation, the deformation amounts of various parts of the side walls of the battery cells 20 are usually different, which easily causes that some parts of the side walls of the battery cells 20 have a large acting force on another adjacent battery cell 20 or the copying member 30, and some parts have a small acting force, that is, the acting force between the adjacent battery cells 20 or between the battery cell 20 and the copying member 30 is uneven, so that the stress concentration is likely to occur.

Thus, the buffer member 40 is provided between the two adjacent battery cells 20 and/or between the battery cell 20 and the adjacent copying member 30; when the battery cells 20 undergo expansion deformation, the deformation force generated by the battery cells 20 can act on the buffer member 40, the magnitudes of the forces acting on the buffer member 40 by various parts of the side walls of the battery cells 20 are different, and the force is transmitted to the adjacent battery cell 20 or copying member 30 through the buffer member 40; and when the force is transmitted to the adjacent battery cell 20 or the copying member 30 by the buffer member 40, the buffer member 40 can more uniformly exert the force to various parts of opposite surfaces of the battery cell 20 or the copying member 30 to reduce the stress concentration.

In this embodiment, the buffer member 40 is provided in the box body 10, and the buffer member 40 is located between the two adjacent battery cells 20 or between the copying member 30 and the adjacent battery cell 20, and the deformation force generated by the deformation of the battery cell 20 is dispersed by the buffer member 40, so that the deformation force generated by the deformation of the battery cell 20 can be uniformly exerted onto another adjacent battery cell 20 or the copying member 30 to reduce the stress concentration.

In some embodiments, the buffer member 40 is a flexible structural member or an elastic structural member.

The buffer member 40 may be a flexible structural member, that is, the buffer member 40 is relatively easy to deform under the action of an external force, and the buffer member 40 may be made of the plastic (such as polymer gel), textile material or other flexible materials. The buffer member 40 may also be an elastic structural member, that is, the buffer member 40 is relatively easy to deform under the action of an external force, and can return to its original shape after the external force is reduced or canceled, and the buffer member 40 may be made of the rubber, the plastic or other elastic materials.

The buffer member 40 may be a flexible structural member or an elastic structural member, and a side of the buffer member 40 facing the battery cell 20 can deform with the expansion of the battery cell 20 to increase the contact area between the buffer member 40 and the battery cell 20, thereby reducing stress concentration at a contact part between the battery cell 20 and the buffer member 40. Meanwhile, the other side of the flexible buffer member 40 can also have a larger contact area with the other adjacent battery cell 20 or the copying member 30, thereby reducing the stress concentration between the buffer member 40 and the other adjacent battery cell 20 or the copying member 30. In this case, the buffer member 40 can better protect the battery cell 20 and the copying member 30.

The buffer member 40 being a flexible structural member can reduce damage that may be caused by rigid contact between the battery cell 20 and the buffer member 40, and can also reduce damage that may be caused to the battery cell 20 during the expansion process.

Since the battery cell 20 expands and contracts during the charging and discharging process, the buffer member 40 is an elastic structural member. The buffer member 40 can deform with the expansion and contraction of the battery cell 20, so that the buffer member 40 can better abut against the battery cell 20.

This embodiment provides some material types of the buffer member 40, so that the buffer member 40 can better disperse the deformation force exerted to the buffer member 40, and the deformation force generated by the deformation of the battery cell 20 can more uniformly act on another adjacent battery cell 20 or the copying member 30.

In some embodiments, the copying member 30 is of an integrally molded structure.

The copying member 30 is the integrally molded structure, that is, the copying member 30 is manufactured through integral molding, and the integral molding refers to a processing method in which a plurality of parts are manufactured simultaneously into a whole member in the manufacturing process. Through the processing method, the product can be manufactured by single processing instead of secondary or multiple processing. In the processing method, the process of connecting and assembling parts and the connecting parts between the connecting parts are reduced, thereby alleviating the problem of low strength at the connecting parts. The integral molding technology also has the advantages of high efficiency, high precision, high molding quality, and the like.

When the copying member 30 includes the housing 31 and the reinforcing structure 32, the housing 31 and the reinforcing structure 32 are integrally molded to improve the structural consistency and the overall strength of the copying member 30.

In this embodiment, the copying member 30 is of the integrally molded structure to alleviate a problem of poor strength of a structural connection part, thereby improving the overall strength of the copying member 30. Meanwhile, the structural consistency of the copying member 30 can be improved, and the utilization rate of the material can be improved.

In some embodiments, the copying member 30 is made of at least one of the plastic and the resin. The copying member 30 is of one of an injection molding structure, a blow molding structure, and an extrusion molding structure.

The copying member 30 may be made of only one of the plastic and the resin, or may be made of both the plastic and the resin. When the copying member 30 includes the housing 31 and the reinforcing structure 32, the housing 31 and the reinforcing structure 32 are made of the plastic and the resin, and the housing 31 and the reinforcing structure 32 may be made of a same material or a different material.

The copying member 30 may be of the injection molding structure, that is, the copying member 30 is manufactured by an injection molding process, and the injection molding process refers to a manufacturing process in which a material in a molten state is injected into a mold and then cooled and solidified to form a product in a desired shape. In the processing method, the process of connecting and assembling parts and the connecting parts between the connecting parts are reduced, thereby alleviating the problem of low strength at the connecting parts. The injection molding process also has the advantages of high efficiency, high precision, high molding quality, good repeatability, and the like.

The copying member 30 may also be a blow molding structure, that is, the copying member 30 is manufactured by a blow molding process, and the blow molding process refers to a manufacturing process in which a heated and softened material is processed into a tube shape and air-blown, and then cooled and solidified to form a product in a desired shape. The processing method has better dimensional stability and structural consistency, in which the process of connecting and assembling parts and the connecting parts between the connecting parts are reduced. This alleviates the problem of low strength at the connecting parts. The blow molding process also has the advantages of high efficiency, low cost, wide application range, and the like.

The copying member 30 may also be of an extrusion molding structure, that is, the copying member 30 is manufactured by an extrusion molding process, the extrusion molding process refers to a manufacturing process in which a material is heated to a molten state, then forms a continuous body with a cross section similar to the shape of the mold through an extrusion mold under the action of pressure, and finally is cooled and shaped and cut to obtain a product in a desired shape. The processing method has better mechanical strength, in which the process of connecting and assembling parts and the connecting parts between the connecting parts are reduced. This alleviates the problem of low strength at the connecting parts. The extrusion process also has the advantages of high efficiency, low cost, wide application range and the like.

When the copying member 30 includes the housing 31 and the reinforcing structure 32, the housing 31 and the reinforcing structure 32 may be made by injection molding, blow molding or extrusion molding to improve the structural consistency and overall strength of the copying member 30.

In this embodiment, the copying member 30 is one of the injection molding structure, the blow molding structure, and the extrusion molding structure, so that the copying member 30 can have better mechanical strength and structural consistency. Meanwhile, the present application can also meet the requirements of the copying member 30 for complex structures, and have the high production efficiency.

In some embodiments, the box body 10 includes a lower box body 12 and a top plate 111 connected to the lower box body 12, the lower box body 12 is provided with an accommodating chamber 101 having an opening on one side, the accommodating chamber 101 is configured to accommodate the battery cell 20 and the copying member 30, the top plate 111 covers an opening side of the accommodating chamber 101, and the lower box body 12 includes a bottom plate 121 opposite to the top plate 111; and The copying member 30 is spaced apart from either the top plate 111 or the bottom plate 121, and a vacant space is formed between the copying member 30 and the corresponding top plate 111 or bottom plate 121.

The upper box body 11 and the lower box body 12 are both partial structures of the box body 10, and the upper box body 11 and the lower box body 12 are covered with each other to define an accommodating chamber 101 for accommodating the battery cell 20. For example, the side beam 131 may be a peripheral structure of the lower box body 12, and the upper box body 11 may be connected to the side beam 131 to be connected to the lower box body 12.

The accommodating chamber 101 refers to a space formed in the lower box body 12, and at least parts of the battery cell 20 and the copying member 30 are accommodated in the accommodating chamber 101. The accommodating chamber 101 may be a cuboid-shaped space, a cylindrical space, a prismatic space, or a space of another shape. The accommodating chamber 101 may also provide a mounting space for other structures, and for example, the expansion beam 132 is provided in the accommodating chamber 101.

The accommodating chamber 101 is a space with an opening at one end, and the upper box body 11 can be connected to the lower box body 12 at the opening side of the accommodating chamber 101 to close the accommodating chamber 101, thereby separating the battery cell 20 and the copying member 30 from the space outside the box body 10.

The top plate 111 is a partial structure of the upper box body 11, and when the upper box body 11 and the lower box body 12 are arranged in a height direction Z of the battery apparatus 100, the top plate 111 is located above the battery cell 20.

The bottom plate 121 opposite to the top plate 111 is a partial structure of the lower box body 12, and when the upper box body 11 and the lower box body 12 are arranged in the height direction Z of the battery apparatus 100, the bottom plate 121 is located below the battery cell 20, and in this case, the accommodating chamber 101 is formed between the top plate 111 and the bottom plate 121.

The copying member 30 is spaced apart from the top plate 111 or the bottom plate 121.

The copying member 30 may be spaced apart from the top plate 111, and the battery cell 20 may also be spaced apart from the top plate 111. The copying member 30 and the battery cell 20 may be provided on the bottom plate 121, the copying member 30 may be provided on the bottom plate 121 by bonding or other connection ways, and the copying member 30 may also be connected to other positions of the box body 10 through other structural members. When the upper box body 11 and the lower box body 12 are arranged in the height direction Z of the battery apparatus 100, the battery cell 20 and the copying member 30 are in a normal state.

The copying member 30 may also be spaced apart from the bottom plate 121, and the battery cell 20 may also be spaced apart from the bottom plate 121. The copying member 30 and the battery cell 20 may be provided on the top plate 111, or may be provided on the box body 10 by using another structure. When the upper box body 11 and the lower box body 12 are provided in the height direction Z of the battery apparatus 100, the battery cell 20 and the copying member 30 are in an inverted state.

A vacant space is formed between the copying member 30 and the corresponding top plate 111 or bottom plate 121, that is, when the copying member 30 is spaced apart from the top plate 111, a vacant space is formed between the copying member 30 and the top plate 111, and when the copying member 30 is spaced apart from the bottom plate 121, a vacant space is formed between the copying member 30 and the bottom plate 121. This arrangement enables the copying member 30 to be neither directly connected to the corresponding top plate 111 or the bottom plate 121, nor indirectly connected to the corresponding top plate 111 or the bottom plate 121 through an intermediate structure (such as a beam structure and a bolted connection structure). This arrangement can simplify the mounting process of the copying member 30, that is, the copying member 30 only needs to be installed in the vacant mounting position, and when the battery cell 20 is connected to the lower box body 12, the copying member 30 only needs to be connected to the lower box body 12 in a same way as the battery cell 20, and no redundant step is required, thereby simplifying the mounting step of the copying member 30.

In this embodiment, the copying member 30 is spaced apart from the top plate 111 of the box body 10, and is not connected to the top plate 111, so that the copying member 30 is mainly used to occupy the vacant mounting position in the battery apparatus 100, and the mounting difficulty of the copying member 30 can also be reduced.

In some embodiments, the adjacent battery cells 20 are electrically connected by an electric connection structure, and the electric connection structure can cross the adjacent copying member 30.

The electric connection structure refers to a structure that transmits electric energy between the two battery cells 20, and the electric connection structure may be a strip, a cable, a flexible printed circuit (FPC), or another structure having a conductive capability. The battery cell 20 may be electrically connected to another adjacent battery cell 20 by using the electric connection structure, so that the plurality of battery cells 20 in the battery apparatus 100 are connected to each other by using the electric connection structure, to implement charging and discharging of the battery apparatus 100.

It can be understood that the battery cell 20 may also be electrically connected to a flexible circuit board sampling device, a negative temperature coefficient thermistor (NTC), or other electronic devices, and the copying member 30 may not be connected to these electronic devices and only serves as a structural member to provide support for the adjacent battery cells 20.

The battery cell 20 may abut against another adjacent battery cell 20, or one or more copying members 30 may be provided between the battery cell 20 and the another adjacent battery cell 20. When the copying member 30 is provided between the two adjacent battery cells 20, the electric connection structure may cross the copying member 30 without being connected to the copying member 30. Since the copying member 30 does not have a charging and discharging capability, this arrangement can reduce the mounting difficulty of the copying member 30, and can also reduce the interference of the copying member 30 on electric energy transmission between the battery cells 20 can also be reduced.

In this embodiment, the adjacent battery cells 20 are connected by the electric connection structure, and the electric connection structure can cross the copying member 30, so as to reduce the mounting difficulty of the copying member 30. Meanwhile, the interference of the copying member 30 on electric energy transmission between the battery cells 20 can also be reduced.

Referring to FIG. 4, FIG. 12, and FIG. 13, in some embodiments, the battery apparatus 100 is any one of a prismatic battery apparatus, a blade battery apparatus, a cylindrical battery apparatus, a pouch battery apparatus, and a laminated battery apparatus.

Referring to FIG. 4, the battery apparatus 100 may be the prismatic battery apparatus, and in this case, the shape of the copying member 30 may be similar to the shape of the prismatic battery cell. For example, the shape of the copying member 30 may be cuboid-shaped.

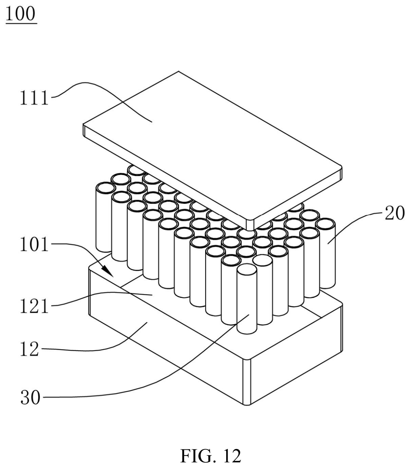

Referring to FIG. 12, the battery apparatus 100 may be the cylindrical battery apparatus, and in this case, the shape of the copying member 30 may be similar to the shape of the cylindrical battery cell. For example, the shape of the copying member 30 may be cylindrical.

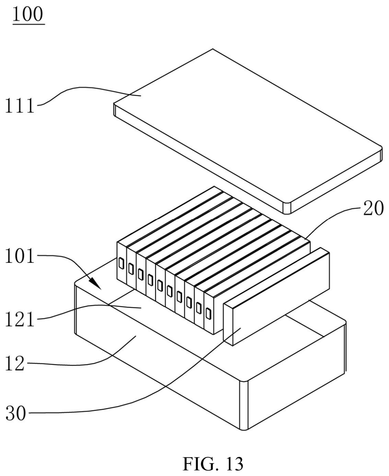

Referring to FIG. 13, the battery apparatus 100 may be the blade battery apparatus, and in this case, the shape of the copying member 30 may be similar to the shape of the blade battery cell. For example, the shape of the copying member 30 may be cuboid shape with a small width.

The battery apparatus 100 may also be a laminated battery apparatus or a pouch battery apparatus, and the shape of the copying member 30 may be configured according to the shape of the battery cell 20.

In some embodiments, the battery apparatus 100 includes a box body 10, a battery cell 20, a copying member 30, and a buffer member 40.

The box body 10 includes a lower box body 12 and an upper box body 11 connected to the lower box body 12, the lower box body 12 includes a side beam 131 and an expansion beam 132, the box body 10 is provided with an accommodating chamber 101 having an opening on one side, and the battery cell 20 and the copying member 30 are both accommodated in the accommodating chamber 101. The upper box body 11 covers the open end of the accommodating chamber 101, the upper box body 11 includes a top plate 111, the top plate 111 is spaced apart from both the copying member 30 and the battery cell 20, and the copying member 30 and the battery cell 20 are not connected to the top plate 111.

The copying member 30 includes the housing 31, the accommodating space 311 is provided in the housing 31, a first reinforcing rib 321 and a second reinforcing rib 322 that are connected to an inner surface of the housing 31 are provided in the accommodating space 311, the first reinforcing rib 321 and the second reinforcing rib 322 intersect with each other, and the accommodating space 311 is divided into a plurality of sub-spaces 3111 by the first reinforcing rib 321 and the second reinforcing rib 322.

The housing 31, the first reinforcing rib 321 and the second reinforcing rib 322 are made of at least one of the plastic and the resin; and the housing 31, the first reinforcing rib 321 and the second reinforcing rib 322 are made by injection molding, blow molding or extrusion molding.

The buffer member 40 is provided between the two adjacent battery cells 20, the buffer member 40 is also provided between the copying member 30 and the adjacent battery cells 20, and the buffer member 40 is an elastic structural member or a flexible structural member.

In a second aspect, some embodiments of the present application further provide an electric device. The electric device includes a vehicle 1000 provided by some embodiments of the first aspect and may be the vehicle 1000, or a mobile phone, a tablet computer, a notebook computer, an electric toy, an electric tool, an electric vehicle, a ship, a spacecraft, and the like.

In the electric device, the battery cell 20 may be replaced by the copying member 30 to change the capacity of the battery apparatus 100, thereby satisfying requirements in different operating conditions and different application scenarios. The copying member 30 can provide support for the adjacent battery cells 20, so that the battery apparatus 100 can still have relatively high stability after some battery cells 20 are removed. In this arrangement, the battery apparatus 100 can conveniently adjust the capacity thereof by replacing the battery cell 20 with the copying member 30, instead of redesigning the structure of the box body 10, the arrangement structure of the battery cell 20, the processing and manufacturing method, and the like, which greatly reduces the cost.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery apparatus, comprising:
a box body;
a plurality of battery cells, provided in the box body, wherein the plurality of battery cells are arranged at least in a first direction;
a copying member, accommodated in the box body, wherein the copying member is configured to replace the battery cell, and the copying member is capable of abutting against the adjacent battery cell and/or the copying member; and
the copying member is made of at least one of plastic, ceramic, fiber, wood, resin, or composite metal material.

2. The battery apparatus according to claim 1, wherein the copying member comprises a housing, the housing is provided with an accommodating space, and the housing is made of at least one of the plastic, the ceramic, the fiber, the wood, the resin, or the composite metal material.

3. The battery apparatus according to claim 2, wherein a reinforcing structure connected to the housing is provided in the accommodating space.

4. The battery apparatus according to claim 3, wherein the battery cell comprises a casing body, the casing body comprises first walls and second walls that are located on a peripheral side of the battery cell and that are sequentially connected end to end, areas of the first walls are greater than areas of the second walls, the first walls are spaced apart from each other in the first direction, the second walls are spaced apart from each other in a second direction, and the second direction and the first direction are arranged at an included angle; and
the housing comprises first surfaces spaced apart from each other in the first direction, the reinforcing structure comprises a first reinforcing rib connected to the housing, and the first reinforcing rib and the first surface are arranged at an included angle.

5. The battery apparatus according to claim 4, wherein the housing further comprises second surfaces spaced apart from each other in the second direction, and the first reinforcing rib and the second surface are arranged at an included angle.

6. The battery apparatus according to claim 5, wherein the reinforcing structure further comprises a second reinforcing rib connected to the housing, the second reinforcing rib intersects with the first reinforcing rib, and the second reinforcing rib and the first surface and/or the second surface are arranged at an included angle.

7. The battery apparatus according to any one of claims 3 to 6, wherein the accommodating space is divided into at least two sub-spaces by the reinforcing structure.

8. The battery apparatus according to any one of claims 3 to 7, wherein the reinforcing structure is made of at least one of metal, the plastic, the ceramic, the fiber, the wood, the resin, or the composite metal material.

9. The battery apparatus according to any one of claims 2 to 8, wherein an accommodating chamber is filled with a filling material.

10. The battery apparatus according to claim 9, wherein the filling material comprises at least one of the metal, the plastic, the ceramic, the fiber, the wood, foam, or the composite metal material.

11. The battery apparatus according to any one of claims 2 to 10, wherein a closed accommodating space is formed in the housing; or
the housing is provided with at least one opening to form an open accommodating space.

12. The battery apparatus according to claim 1, wherein the copying member is of a solid structure.

13. The battery apparatus according to any one of claims 1 to 12, wherein a shape of the copying member is the same as a shape of the battery cell.

14. The battery apparatus according to claim 13, wherein a ratio of a volume of the copying member to a volume of the battery cell ranges from 0.9 to 1.1.

15. The battery apparatus according to claim 13 or 14, wherein in the first direction, a ratio of a dimension of the copying member to a dimension of the battery cell ranges from 0.9 to 1.1; and/or
in the second direction, a ratio of a dimension of the copying member to a dimension of the battery cell ranges from 0.9 to 1.1, and the second direction and the first direction are arranged at the included angle.

16. The battery apparatus according to any one of claims 1 to 15, wherein a beam body is provided in the box body, and at least one side of the copying member abuts against the beam body.

17. The battery apparatus according to claim 16, wherein the beam body comprises an expansion beam located between the two adjacent battery cells; and/or
the beam body comprises a side beam located on a peripheral side of the box body, and the side beam is adjacent to the battery cell and/or the copying member.

18. The battery apparatus according to any one of claims 1 to 17, wherein in a width direction of the box body, the copying member is located in the middle of the box body; and/or
in a length direction of the box body, the copying member is located in the middle of the box body.

19. The battery apparatus according to any one of claims 1 to 18, wherein each peripheral side of the copying member abuts against the adjacent battery cell.

20. The battery apparatus according to any one of claims 1 to 19, further comprising:
a buffer member, provided between the two adjacent battery cells, and/or provided between the copying member and the adjacent battery cells.

21. The battery apparatus according to any one of claims 1 to 20, wherein the copying member is an integrally molded structure.

22. The battery apparatus according to any one of claims 1 to 20, wherein the copying member is made of at least one of the plastic and the resin; and
the copying member is one of an injection molding structure, a blow molding structure, and an extrusion molding structure.

23. The battery apparatus according to any one of claims 1 to 22, wherein the box body comprises a lower box body and a top plate connected to the lower box body, the lower box body is provided with an accommodating chamber having an opening on one side, the accommodating chamber is configured to accommodate the battery cell and the copying member, the top plate covers an opening side of the accommodating chamber, and the lower box body comprises a bottom plate opposite to the top plate; and
the copying member is spaced apart from either the top plate or the bottom plate, and a vacant space is formed between the copying member and the corresponding top plate or bottom plate.

24. The battery apparatus according to any one of claims 1 to 23, wherein the adjacent battery cells are electrically connected by an electric connection structure, and the electric connection structure is capable of crossing the adjacent copying members.

25. The battery apparatus according to any one of claims 1 to 24, wherein the battery apparatus is any one of a prismatic battery apparatus, a blade battery apparatus, a cylindrical battery apparatus, a pouch battery apparatus, and a laminated battery apparatus.

26. An electric device, comprising the battery apparatus according to any one of claims 1 to 25.
